# EUROPÄISCHE PATENTANMELDUNG

(11) **EP 4 534 452 A1**
(43) Veröffentlichungstag der Anmeldung: **09.04.2025**
(21) Anmeldenummer: 24204573.0
(22) Anmeldetag: 04.10.2024
(51) Int. Cl.: B65G 1/04

(54) **AUTOMATISIERTES BLOCKLAGERSYSTEM UND VERFAHREN ZUM BETREIBEN EINES SOLCHEN BLOCKLAGERSYSTEMS**

(30) Priorität: 04.10.2023 DE 102023126903
(71) Anmelder: Gebhardt Fördertechnik GmbH, D-74889 Sinsheim (DE)
(72) Erfinder: Gebhardt, Marco, 74889 Sinsheim (DE); EDER, Jörg, 67661 Kaiserslautern (DE)
(74) Vertreter: Patentanwälte und Rechtsanwalt Weiß, Arat & Partner mbB

(57) **Zusammenfassung**

Bei einem Verfahren zum Betreiben eines Blocklagersystems soll zumindest ein Bedienfahrzeug (3.1, 3.2) auf einem Fahrspur-Raster (15) verkehren.

## Beschreibung

### Technisches Gebiet

Die Erfindung betrifft ein automatisiertes Blocklagersystem sowie ein Verfahren zum Betreiben desselben gemäss den unabhängigen Ansprüchen.

### Stand der Technik

Automatisierte Blocklagersysteme sind bereits in vielfältiger Form und Ausgestaltung bekannt und gebräuchlich. So wird beispielsweise in der EP 2 920 088 A1 ein automatisiertes Blocklagersystem beschrieben.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein automatisiertes Blocklagersystem gemäss der vorliegenden Erfindung umfasst einen Regalbau mit Schächten zur Blocklagerung von Ladeeinheiten in vertikalen Stapeln. Beispielhafte Regalbauten mit Schächten zur Blocklagerung sind beispielsweise in der EP 2 920 088 A1 und in der DE 10 2020 212 346 A1 beschrieben. Als Ladeeinheiten kommen insbesondere vertikal stapelbare Behälter, Kisten und dergleichen in Betracht.

Die Schächte des Blocklagersystems weisen eine rechteckige Grundfläche auf, und sind in einer Draufsicht auf das Blocklagersystem rasterförmig angeordnet. Die Grundfläche kann beispielsweise quadratisch sein oder eine beliebige rechteckige Form aufweisen. Die rasterförmige Anordnung der Schächte ergibt in einer Draufsicht vorzugsweise eine Anordnung aneinander angrenzender Rechtecke mit parallel zueinander verlaufenden Kanten. Die rasterförmige Anordnung ist vorzugsweise eine regelmässige Anordnung, bei welcher die Schächte und ebenso die weiter unten näher beschriebenen Raster-Elemente vorzugsweise "Kante an Kante" aneinander grenzen.

Das Blocklagersystem umfasst ein an dem Raster der Schächte ausgerichtetes Fahrspur-Raster, welches rechteckige Raster-Elemente umfasst, die orthogonal und parallel zueinander verlaufende Fahrspuren ausbilden. Das Blocklagersystem kann ein einziges Fahrspur-Raster umfassen. Das Fahrspur-Raster kann als Fahrschienen-Raster, auch als "grid" bezeichnet, ausgebildet sein. Vorzugsweise sind die Raster-Elemente an den Grundflächen der Schächte ausgerichtet. Die Raster-Elemente können im Wesentlichen deckungsgleich zu den Grundflächen der Schächte ausgebildet sein. Fluchtend angeordnete Kanten benachbarter Raster-Elemente bilden vorzugsweise geradlinige Fahrwege in Form von Fahrschienen für die Bedienfahrzeuge. Die Raster-Elemente sind vorzugsweise oberhalb der Schächte angeordnet.

Die Kanten der Raster-Elemente bilden vorzugsweise Fahrschienen-Abschnitte.

Vorzugsweise bildet jede Kante jedes Raster-Elements einen Abschnitt einer Fahrspur, welche aus einem Fahrschienen-Paar besteht. Das Fahrschienen-Paar wird wiederum vorzugsweise durch fluchtend aneinander angrenzende Fahrschienen-Abschnitte gebildet, die von den Kanten der fluchtend hintereinander angeordneten Raster-Elemente bereitgestellt werden.

Wie bereits erwähnt, grenzen die Raster-Elemente vorzugsweise unmittelbar aneinander. Durch diesen Aufbau kann das Fahrspur-Raster von den (nachstehend beschriebenen) Bedienfahrzeuge befahren werden. Wie nachstehend noch näher erläutert, können die Bedienfahrzeuge während ihrer Fahrten auf dem Fahrspur-Raster vorzugsweise nur translatorische Bewegungen, aber keine rotatorischen Bewegungen durchführen. Vereinfacht ausgedrückt sind also nur Geradeausfahrten, aber keine Drehungen oder Kurvenfahrten erlaubt.

Eine Fahrspur bezeichnet vorzugsweise eine geradlinige Strecke innerhalb des Fahrspur-Rasters, welche aus einem Fahrschienen-Paar gebildet wird, wobei die Fahrspur sich beispielsweise zwischen zwei einander gegenüberliegenden Begrenzungen des Fahrspur-Rasters befindet, also beispielsweise "von Wand zu Wand", also beispielsweise innerhalb einer nachstehend noch beschriebenen äusseren Begrenzung, verläuft.

Ein nachstehend noch erwähnter geradliniger Fahrweg ist vorzugsweise ein Abschnitt einer Fahrspur, wobei ein geradliniger Fahrweg maximal dieselbe Länge wie die Fahrspur aufweisen und somit mit dieser identisch sein kann.

Ein Fahrweg kann aber auch nur ein Abschnitt einer Fahrspur sein, dessen Länge geringer ist, als eine Länge der Fahrspur. Absolvieren die nachstehend noch näher erläuterten Bedienfahrzeuge Fahrwege, welche nicht geradlinig verlaufen, so setzen sich diese vorzugsweise aus aneinander angrenzenden geradlinigen Fahrwegen zusammen, welche orthogonal oder parallel zueinander verlaufen.

Anders ausgedrückt ist eine Fahrspur diejenige maximale geradlinige Strecke, welche ein unmittelbar an einer Begrenzung des Fahrspur-Rasters startendes Bedienfahrzeug ohne Abzubiegen zwischen diesen Begrenzungen bewältigen könnte, falls sämtliche Raster-Elemente, welche diese Fahrspur bilden, befahrbar ist. Ein geradliniger Fahrweg verläuft entlang einer solchen Fahrspur und ist höchstens so lang wie diese Fahrspur. Wechseln die Bedienfahrzeuge in einer nachstehend noch näher beschriebenen Weise ihre Fahrtrichtung, so ergibt sich die zurückgelegte Strecke auf dem Fahrspur-Raster als Fahrweg, welcher aus aneinander angrenzenden geradlinigen Fahrwegen zusammengesetzt ist.

Hinsichtlich der Begrifflichkeiten sei auf Folgendes hingewiesen: Die Länge eines geradlinigen Fahrwegs ist vorzugsweise durch die Anwesenheit etwaiger Begrenzungen, beispielsweise der nachfolgend noch beschriebenen unbeweglichen Barrieren, begrenzt. Für die Länge einer Fahrspur gilt dies vorzugsweise nicht, sie verläuft vorzugsweise zwischen den äusseren Begrenzungen des Fahrspur-Rasters, zwischen denen sie sich erstreckt.

Die Raster-Elemente und das Fahrspur-Raster sind vorzugsweise derart eingerichtet und ausgebildet, dass Ladeeinheiten durch Öffnungen, welche von den Kanten jedes Raster-Elements umschlossen werden, in die Schächte eingebracht und von dort entnommen werden können. Ein Ein- und Auslagern sowie die grundsätzliche Betriebsweise eines derart gebauten Blocklagersystems ist bekannt.

Hierbei umfasst das "an dem Raster der Schächte ausgerichtete Fahrspur-Raster" auch Ausführungsformen, bei denen mehr Raster-Elemente als Schächte vorhanden sind. Vorzugsweise sind in einem solchen Ausführungsbeispiel diejenigen Raster-Elemente, welche oberhalb eines Schachts angeordnet sind, an den Grundflächen dieser Schächte ausgerichtet oder deckungsgleich zu diesen Grundflächen.

Das Fahrspur-Raster ist oberhalb der Schächte angeordnet.

Das Blocklagersystem umfasst weiterhin zumindest ein automatisches Bedienfahrzeug, welches eingerichtet ist, auf dem Fahrspur-Raster entlang der orthogonal und parallel zueinander verlaufenden Fahrspuren, also beispielsweise auf den Fahrschienen, zu verkehren. Vorzugsweise umfasst das Blocklagersystem mehrere Bedienfahrzeuge. Das "automatische Bedienfahrzeug" wird nachstehend meist als "Bedienfahrzeug" bezeichnet.

Um entlang der vorstehend beschriebenen Fahrspuren zu verkehren und an Kreuzungen, wo sich zwei Fahrschienen im 90°-Winkel kreuzen, die Fahrtrichtung wechseln zu können, können die Bedienfahrzeuge über zwei Radsätze verfügen. Alternativ können die Bedienfahrzeuge Mecanum-Räder, Allseitenräder oder drehbare Räder aufweisen.

Das Blocklagersystem kann weiterhin eine das Fahrspur-Raster umgebende äussere Begrenzung umfassen. Die äussere Begrenzung kann das Fahrspur-Raster im Wesentlichen vollständig umgeben, d.h. umschliessen. Hierbei kann angedacht sein, dass Unterbrechungen in der Begrenzung nur dort vorgesehen sind, wo Öffnungen, beispielsweise zumindest eine Wartungs- und Entnahme-Öffnung, angeordnet ist. Die äussere Begrenzung dient vorzugsweise als Runterfallschutz für das Bedienfahrzeug und die Ladegüter und kann gleichzeitig einen unbefugten Zutritt durch Personen auf das Fahrspur-Raster verhindern. Eine solche äussere Begrenzung kann beispielsweise als Zaun, Geländer, Wand oder Gitter ausgebildet sein. Vorzugsweise ist die äussere Begrenzung so ausgebildet, dass eine Bedienperson von aussen, wenn sie beispielsweise auf einem Podest oder einer Leiter oder Bühne steht, das Fahrspur-Raster nicht durch die äussere Begrenzung hindurch betreten und auch keine Gliedmassen hindurchstrecken kann. Das Betreten des Fahrspur-Rasters, sofern beispielsweise zu Wartungszwecken vorgesehen, ist vorzugsweise ausschliesslich über hierfür vorgesehene Türen oder ähnliche bewegliche Barrieren möglich, welche eine dem Zutritt dienende Öffnung verschliessen.

Im einfachsten Fall kann eine äussere Begrenzung, welche lediglich einen Runterfallschutz für die Bedienfahrzeuge bietet, aus Prellböcken an den Fahrspur-Enden gebildet sein. Eine solche äussere Begrenzung ist nicht durchgehend und umgibt das Fahrspur-Raster nicht vollständig, ist aber von der vorliegenden Erfindung ebenfalls umfasst. Vorzugsweise handelt es sich bei der äusseren Begrenzung jedoch um eine das Fahrspur-Raster im Wesentlichen vollständig umschliessende Einrichtung, welche neben der Bereitstellung eines Runterfallschutzes auch das Betreten des Fahrspur-Rasters durch eine Bedienperson verhindert.

Einige oder sämtliche Abschnitte der Begrenzung können im Wesentlichen parallel zu zumindest einem Fahrweg verlaufen.

Das Blocklagersystem umfasst weiterhin eine vorstehend bereits erwähnte Öffnung für das Bedienfahrzeug und/oder eine Bedienperson.

Eine Öffnung für die Bedienperson und/oder das Bedienfahrzeug ermöglicht entweder einem Bedienfahrzeug das Verlassen des Fahrspur-Rasters und/oder einer Bedienperson einen Zutritt auf das Fahrspur-Raster. Hierbei können sich beispielsweise Fahrschienen in Verlängerung der Fahrschienen-bildenden Kanten der Raster-Elemente durch die Öffnung hindurch erstrecken. Es kann auch daran gedacht sein, dass keine die Öffnung durchdringenden Fahrschienen vorhanden sind, und somit eine Durchfahrt durch die Öffnung nicht möglich ist.

Insbesondere wenn Fahrschienen vorhanden sind, welche die Öffnung durchdringen, kann daran gedacht sein, dass sich entweder ein von dem Fahrspur-Raster abgewandter Wartungs- und Entnahme-Raum oder ein weiteres Fahrspur-Raster an die Öffnung anschliesst.

Die Öffnung kann also eine Wartungs- und Entnahme-Öffnung sein, oder beispielsweise einen Durchgang zwischen dem Fahrspur-Raster und einem weiteren Fahrspur-Raster bereitstellen. Eine solche Öffnung erlaubt einer Bedienperson den Zutritt auf das Fahrspur-Raster und einem Bedienfahrzeug das Verlassen des Fahrspur-Rasters.

Alternativ kann die Öffnung lediglich einer Bedienperson im Bedarfsfall, beispielsweise zwecks Wartung, Zutritt zu dem Fahrspur-Raster gewähren. Fahrschienen, welche die Öffnung durchdringen, sind dann nicht erforderlich. Eine solche Öffnung kann beispielsweise die Zarge oder Aufhängung einer Tür in einer äusseren Begrenzung des Blocklagersystems sein. Ist diese Tür, welche vorrangig oder ausschliesslich dem Zutritt einer Bedienperson dient, in einer als Zaun ausgebildeten äusseren Begrenzung vorgesehen, so stellt diese Tür oftmals die schwächste - und somit für ein Durchschlagen eines fehlerhaft mit hoher Geschwindigkeit fahrenden Bedienfahrzeugs anfälligste - Stelle dar.

Der Öffnung ist also, wie bereits angedeutet, vorzugsweise - aber nicht zwingend - eine bewegliche Barriere zugeordnet. Vorzugsweise wird die Öffnung von dieser ihr zugeordneten beweglichen Barriere reversibel verschlossen. Vorzugsweise verschliesst die vorgenannte bewegliche Barriere die Öffnung im Automatikbetrieb dauerhaft, und wird nur zu beispielsweise Wartungs-Zwecken geöffnet. Trennt die bewegliche Barriere zwei Klima-Zonen, so wird sie im laufenden Betrieb vorzugsweise nur kurzzeitig geöffnet, um einem Bedienfahrzeug einen Wechsel zwischen diesen Klima-Zonen zu erlauben.

Die bewegliche Barriere kann eine Tür, ein Tor, ein Rolltor, ein Schnelllauftor oder dergleichen sein. Es kann aber auch an versenkbare Poller, Schranken, oder dergleichen gedacht sein. Im Allgemeinen kann entweder daran gedacht sein, dass die bewegliche Barriere die Öffnung, der sie zugeordnet ist, nur in Bezug auf eine Durchfahrt eines Bedienfahrzeugs reversibel verschliesst. Ein solches Verschliessen kann bereits über einen versenkbaren Poller erfolgen, welchen zwar eine Bedienperson, nicht aber das Bedienfahrzeug überwinden kann. Alternativ kann das reversible Verschliessen auch in Bezug auf einen Durchtritt einer Bedienperson erfolgen. Soll eine Bedienperson von der beweglichen Barriere im geschlossenen Zustand daran gehindert werden, die Öffnung zu durchqueren, so kann an eine Tür, ein Rolltor oder dergleichen gedacht sein. An einer Tür oder einem Rolltor kann sich eine Bedienperson nicht vorbeizwängen, gleichzeitig verhindern eine Tür oder ein Rolltor die Durchfahrt eines Bedienfahrzeugs. Ein solches Vorbeizwängen ist beispielsweise bei den meisten Pollern problemlos möglich.

Der Öffnung kann also eine Tür, ein Tor oder eine andere bewegliche Barriere zugeordnet sein, mittels der die Öffnung bedarfsweise geöffnet und verschlossen werden kann.

Vorzugsweise ist das Fahrspur-Raster von einer äusseren Begrenzung umgeben, welche lediglich durch Öffnungen unterbrochen ist, die ihrerseits von einer beweglichen Barriere reversibel verschlossen sein können.

Schliesst sich ein Wartungs- und Entnahme-Raum an, so kann die Öffnung eine bereits erwähnte Wartungs- und Entnahme-Öffnung sein. Der Wartungs- und Entnahme-Raum kann von einer Plattform umgeben sein. In alternativen Ausführungsbeispielen kann der Wartungs- und Entnahme-Raum von der Plattform gebildet sein. Der Wartungs- und Entnahme-Raum umfasst vorzugsweise Fahrschienen, welche fluchtend mit den Fahrschienen-bildenden Kanten des unmittelbar vor der Öffnung gelegenen Raster-Elements angeordnet sind, um den Bedienfahrzeugen die Einfahrt zu erlauben.

Das weitere Fahrspur-Raster kann Teil eines benachbarten Regalbaus mit Schächten und den anderen vorbeschriebenen Einrichtungen und Merkmalen sein. Alternativ können das Fahrspur-Raster und das weitere Fahrspur-Raster Teil desselben Fahrspur-Rasters sein, welches durch eine Wand oder eine andere geeignete Trennungs-Einrichtung in zwei Teile untergliedert ist. Innerhalb dieser Wand ist dann vorzugsweise die Öffnung angeordnet.

Sind das Fahrspur-Raster sowie der darunterliegende Regalbau oder das weitere Fahrspur-Raster und der darunterliegende Regalbau thermisch isoliert, so kann bei Verwendung einer geeigneten Trenn-Einrichtung zwischen dem Fahrspur-Raster und dem weiteren Fahrspur-Raster eine Klima-Zonen-Trennung realisiert werden. Dies ist beispielsweise bei der Lagerung gekühlter oder tiefgekühlter Produkte sowie bei der Verwendung einer speziellen Atmosphäre vorteilhaft. Die Trenn-Einrichtung kann eine geeignete Tür oder beispielsweise eine Schleuse umfassen. Eine Lagerung (tief)gekühlter Produkte oder eine Lagerung unter beispielsweise Schutzatmosphäre kann hierbei entweder im Regalbau unter dem Fahrspur-Raster oder im Regalbau unter dem weiteren Fahrspur-Raster erfolgen.

Die Öffnung kann eingerichtet sein, einem Bedienfahrzeug das Einfahren in den Wartungs- und Entnahme-Raum oder auf das weitere Fahrspur-Raster zu erlauben. Alternativ oder zusätzlich kann die Öffnung eingerichtet sein, einer Bedienperson Zutritt auf das Fahrspur-Raster zu gewähren.

Das Blocklagersystem umfasst ferner eine unbewegliche Barriere, wobei zumindest ein Teil-Abschnitt dieser unbeweglichen Barriere auf dem Fahrspur-Raster auf einer auf die Öffnung zu verlaufenden geradlinigen Fahrspur in einem vorbestimmten Abstand von der Öffnung auf einem Raster-Element angeordnet ist, wobei dieser Abstand im Hinblick auf eine maximale auf die Öffnung zu verlaufenden Beschleunigungsstrecke für das automatische Bedienfahrzeug gewählt sein kann. Dieser Abstand kann ferner so gewählt sein, dass eine maximale kinetische Energie, welche das Bedienfahrzeug auf dieser Beschleunigungsstrecke erreichen kann, nicht ausreicht, um eine vorzugsweise vorhandene und der Öffnung zugeordnete bewegliche Barriere zu überwinden. Wie bereits erwähnt ist bevorzugt, aber nicht zwingend, jeder Öffnung eine sie reversibel verschliessende bewegliche Barriere zugeordnet.

Ist keine bewegliche Barriere vorhanden, welche die Öffnung reversibel verschliesst so bewirkt die unbewegliche Barriere, dass ein auf die Öffnung zu fahrendes Bedienfahrzeug die Öffnung nur mit einer sehr geringen Geschwindigkeit durchqueren kann. Beim Durchqueren der Öffnung weist das Bedienfahrzeug also eine geringe kinetische Energie auf.

Hierfür sind zwischen dem Raster-Element, auf dem die unbewegliche Barriere oder zumindest ein Teil-Abschnitt derselben befestigt ist, und der Öffnung maximal vier Raster-Elemente vorgesehen.

Vorzugsweise ist daran gedacht, dass zumindest ein Teil-Abschnitt von zumindest einer unbeweglichen Barriere auf dem Fahrspur-Raster auf jeder auf die Öffnung zu verlaufenden Fahrspur angeordnet ist.

Handelt es sich bei zwei auf die Öffnung zu verlaufenden Fahrspuren um benachbarte Fahrspuren, so kann vorzugsweise daran gedacht sein, dass die auf diesen Fahrspuren befindlichen Teil-Abschnitte zu derselben unbeweglichen Barriere gehören. Es kann auch daran gedacht sein, Teil-Abschnitte unterschiedlicher unbeweglicher Barrieren auf den vorgenannten Fahrspuren anzuordnen. Insbesondere, wenn die auf die Öffnung zu verlaufenden Fahrspuren nicht benachbart sind, weil beispielsweise jede der Fahrspuren auf eine andere Öffnung zu verläuft, so kann daran gedacht sein, dass die Teil-Abschnitte zu unterschiedlichen unbeweglichen Barrieren gehören.

Das weiter oben erwähnte "Überwinden" der beweglichen Barriere, welche der Öffnung zugeordnet sein kann, kann bedeuten, dass das Bedienfahrzeug die bewegliche Barriere im geschlossenen Zustand teilweise oder vollständig durchbricht. Einerseits kann "überwinden" bedeuten, dass das Bedienfahrzeug die bewegliche Barriere vollständig zerstört und anschliessend beispielsweise mit einer für eine Bedienperson noch immer gefährlichen kinetischen Energie in den Wartungs- und Entnahmeraum einfährt. Andererseits kann ein "Überwinden" bereits dann vorliegen, wenn das Bedienfahrzeug die geschlossene Barriere nur teilweise durchbricht und die Öffnung nur teilweise durchquert, wobei dennoch eine sich unmittelbar hinter der beweglichen Barriere aufhaltende Bedienperson gefährdet wäre. Anders ausgedrückt kann ein "Überwinden" der geschlossenen beweglichen Barriere vorliegen, wenn das Bedienfahrzeug die bewegliche Barriere durchbricht und mit einer verminderten Geschwindigkeit - und somit einer verminderten kinetischen Energie - beispielsweise in den Wartungs- und Entnahmeraum einfährt. Andererseits kann ein "Überwinden" der geschlossenen beweglichen Barriere auch dann vorliegen, wenn das Bedienfahrzeug die geschlossene bewegliche Barriere zwar nicht vollständig durchbricht, aber dennoch in einem solchen Umfang zerstört, dass zumindest ein Abschnitt des Bedienfahrzeugs, üblicherweise gemeinsam mit Teilen der beweglichen Barriere, in beispielsweise den Wartungs- und Entnahmeraum oder in eine Wartungs-Plattform eindringt, und erst dann zum Stillstand kommen. Im letztgenannten Fall bleibt das Bedienfahrzeug sozusagen während des teilweisen Durchdringens der beweglichen Barriere in der Öffnung "stecken".

Es versteht sich, dass nicht nur die Auswahl der maximalen Beschleunigungsstrecke durch entsprechende Platzierung der unbeweglichen Barriere wie vorstehend beschrieben, sondern auch die Ausgestaltung, insbesondere die Stabilität, der die Öffnung reversibel verschliessenden beweglichen Barriere deren Überwindbarkeit mitbestimmt.

Im Rahmen einer nicht von der vorliegenden Erfindung umfassten Ausführungsvariante wäre es also denkbar, auf die vorstehend beschriebene unbewegliche Barriere zu verzichten, jeder Öffnung eine bewegliche Barriere zuzuordnen, und lediglich die beweglichen Barrieren ausreichend stabil zu gestalten. Gegenüber einer solchen Ausführungsform bietet die vorliegende Erfindung jedoch zahlreiche Vorteile:
Erstens kann die unbewegliche Barriere im Gegensatz zu einer besonders stabilen beweglichen Barriere niemals unerwünschterweise offenstehen. Wird zu Gunsten einer besonders stabilen beweglichen Barriere auf die unbewegliche Barriere verzichtet, so kann es vorkommen, dass die bewegliche Barriere fehlerbedingt offensteht, und ihre Barriere-Funktion nicht ausübt. Diese Problematik besteht bei unbeweglichen Barrieren per se nicht, da sie ihre Funktion jederzeit ausüben.

Zweitens ist eine besonders stabile bewegliche Barriere, die nicht durch eine unbewegliche Barriere gemäss der vorliegenden Erfindung "abgesichert" ist, einerseits schwer und somit auch fehleranfällig und weiterhin teuer und aufwändig in der Handhabung. Die Anordnung der unbeweglichen Barriere gemäss der vorliegenden Erfindung überwindet diese Nachteile, weil dann keine besonders stabile bewegliche Barriere mehr benötigt wird. Anders ausgedrückt erlaubt die erfindungsgemässe Begrenzung der maximalen auf die Öffnung zu verlaufenden "Anlaufstrecke" bzw. Beschleunigungsstrecke die Verwendung von weniger stabilen und somit kostengünstigen beweglichen Barrieren bei gleichzeitiger Erhöhung der Sicherheit.

Wird, was von der vorliegenden Erfindung ebenfalls umfasst ist, die Öffnung nicht von einer ihr zugeordneten beweglichen Barriere verschlossen, so bewirkt die stets vorhandene unbewegliche Barriere auf der "Anlaufstrecke" vor der Öffnung allein eine signifikant verbesserte Sicherheit einer hinter der Öffnung befindlichen Bedienperson.

Analoge Überlegungen gelten für eine Ausführungsform, bei der statt eines Wartungs- und Entnahmeraums ein weiteres Fahrspur-Raster oder lediglich eine Wartungs-Plattform ohne Einfahr-Möglichkeit für Bedienfahrzeuge vorhanden ist.

Der Teil-Abschnitt der unbeweglichen Barriere ist in einem solchen Abstand von der Öffnung auf einem Raster-Element angeordnet, dass zwischen diesem Raster-Element und der Öffnung maximal vier Raster-Elemente liegen. Es kann auch daran gedacht sein, dass der vorgenannte Abstand maximal drei oder maximal zwei Raster-Elemente beträgt. Es kann auch an einen Abstand von nur einem Raster-Element gedacht sein. Der maximale Abstand kann an eine Ausdehnung des Bedienfahrzeugs angepasst sein.

Umfasst das Blocklagersystem mehrere unbewegliche Barrieren, welche wie vorstehend beschrieben in Bezug auf eine oder mehrere Öffnungen angeordnet sind, so können die genannten maximalen Abstände zwischen der Öffnung und der unbeweglichen Barriere für einige oder, was bevorzugt ist, für sämtliche unbewegliche Barrieren des Blocklagersystems gelten.

Die unbeweglichen Barrieren gemäss der vorliegenden Erfindung sorgen dafür, dass ein auf diese Barrieren auffahrendes Bedienfahrzeug abgebremst und vorzugsweise zum Stillstand gebracht wird, anstatt die bewegliche Barriere überwindend beispielsweise eine Bedienperson im Wartungs- und Entnahmeraum zu gefährden.

Es kann auch an Ausführungsvarianten gedacht sein, bei denen abhängig von der Bauweise und Stabilität der unbeweglichen Barriere sowie der kinetischen Energie des Bedienfahrzeugs beim Auffahren auf die unbewegliche Barriere im Kollisionsfall die unbewegliche Barriere zerstört wird und das Bedienfahrzeug mit verringerter Geschwindigkeit weiterfährt. Auch in diesem Fall ist die nach der Kollision verbleibende kinetische Energie so gering, dass die bewegliche Barriere nicht überwunden wird. Entsprechende Berechnungen und Modellierungen hinsichtlich Festigkeit, Stabilität und dergleichen kann der Fachmann bei der Konstruktion des Blocklagersystems durchführen.

Eine "auf die Öffnung zu verlaufende Fahrspur" meint hierbei vorzugsweise eine Fahrspur, welche einem auf ebendieser Fahrspur fahrenden Bedienfahrzeug eine geradlinige Fahrt ohne Abbiegen durch die Öffnung hindurch erlauben würde.

Weiterhin kann dann von einer "auf die Öffnung zu verlaufenden Fahrspur" die Rede sein, wenn zumindest eine gewisse Überlappung zwischen einer Kante eines unmittelbar vor der Öffnung angeordneten Raster-Elements dieser Fahrspur und der Öffnung vorliegt. Dies wird weiter unten näher erläutert. Neben Öffnungen, welche einem Bedienfahrzeug die Durchfahrt in beispielsweise einen hinter der Öffnung liegenden Wartungs- und Entnahme-Raum ermöglichen sollen, kann nämlich auch an Öffnungen gedacht sein, welche einer Bedienperson Zutritt auf das Fahrspur-Raster gewähren. Diese Öffnungen können durchaus schmaler als ein Bedienfahrzeug sein, und somit im Normalbetrieb keinerlei Durchfahrt eines solchen Bedienfahrzeugs erlauben. In den weiter unten geschilderten Ausführungsbeispielen ist jedoch vorzugsweise auch bei solchen Öffnungen an die Anordnung einer unbeweglichen Barriere auf derjenigen Fahrspur gedacht, welche auf diese Öffnung zu verläuft.

Eine Anordnung der Barriere "auf" dem Raster-Element meint hierbei, dass die Barriere so befestigt ist, dass Bedienfahrzeuge das betreffende Raster-Element nicht befahren können und das Raster-Element somit nicht als Bestandteil eines Fahrwegs dienen kann.

Handelt es sich bei der Barriere beispielsweise um eine im Wesentlichen L-förmige Wand, so stellen die beiden Schenkel der L-förmigen Wand die Abschnitte dieser Barriere dar, wobei Teil-Abschnitte jedes Schenkels auf unterschiedlichen, vorzugsweise fluchtend nebeneinander angeordneten, Raster-Elementen angeordnet sind.

Im Allgemeinen kann, ausgehend von der L-förmigen Wand, daran gedacht sein, dass die unbewegliche Barriere orthogonal zueinander orientierte Abschnitte umfasst. Diese müssen nicht zwingend eine L-Form ergeben und die unbewegliche Barriere muss nicht zwingend eine Wand sein.

Die "maximal vier Raster-Elemente" bezeichnen die Raster-Elemente zwischen der Öffnung und demjenigen Raster-Element, auf dem die unbewegliche Barriere angeordnet ist, unabhängig davon, wo auf diesem Raster-Element die unbewegliche Barriere angeordnet ist. Beispielsweise kann die unbewegliche Barriere im Wesentlichen dieselbe Ausdehnung aufweisen, wie das Raster-Element. Dies kann bei einem voluminösen Prellbock der Fall sein. Alternativ kann die unbewegliche Barriere eine eher schmale Wand sein, welche in der Draufsicht nur einen geringen Teil der Fläche des Raster-Elements einnimmt. Eine solche Wand kann ferner mittig oder randseitig auf dem Raster-Element befestigt sein.

Eine geradlinige Fahrt des Bedienfahrzeugs auf die Öffnung zu und gegebenenfalls durch die Öffnung hindurch ist somit nur möglich ist, wenn sie zwischen der unbeweglichen Barriere und der Öffnung beginnt. Eine geradlinige Fahrt meint hierbei, wie zuvor bereits erläutert, vorzugsweise eine Fahrt entlang parallel zueinander verlaufender Kanten benachbarter und fluchtend zueinander angeordneter Raster-Elemente, welche eine Fahrspur bilden, die unmittelbar in die Öffnung hinein oder durch sie hindurch führt. Eine geradlinige Fahrt umfasst also kein Abbiegen.

Ein Vorteil der unbeweglichen Barriere gemäss der vorliegenden Erfindung liegt darin, dass sie auf robuste Art, d.h. auch bei einem Auftreten beliebiger steuerungs- und bedien-technischer Fehler, Bedienpersonen vor Verletzungen schützt, die sich hinter der Öffnung und, falls vorhanden, hinter der beweglichen Barriere, beispielsweise auf einer Wartungs-Plattform, befinden. Da die unbewegliche Barriere, beispielsweise im Gegensatz zu beweglichen Barrieren, ein "passives" Bauteil darstellt, übt sie ihre Sicherungs-Funktion jederzeit aus. Es kann daran gedacht sein, genau eine einzige unbewegliche Barriere einzusetzen, welche auf nur einem einzigen Raster-Element angeordnet sein kann, um Durchsatz und Effizienz des Blocklagersystems möglichst wenig zu beeinträchtigen.

Die unbewegliche Barriere kann ausgewählt sein aus der Gruppe umfassend eine Wand, ein Pfosten, ein Poller, ein Prellbock, eine Fangnetz-Konstruktion. Weitere Alternativen sind denkbar. Poller und Pfosten können im Wesentlichen senkrecht sich erstreckende unbewegliche Barrieren sein. Eine Grenze zwischen einem Prellbock und einer Wand kann fliessend sein. Eine Wand ist vorzugsweise als durchgehend geschlossener Flächenabschnitt ausgebildet, wobei ein Prellbock durchaus ähnlich einer Wand gestaltet sein kann.

Im Allgemeinen ist anzumerken, dass Ausdehnung, Grösse und Lage der unbeweglichen Barriere, also beispielsweise der Wand, des Prellbocks und des Pollers jeweils hinsichtlich der gewünschten Stabilität oder hinsichtlich anderer Anforderungen ausgewählt und angepasst werden kann.

Eine unbewegliche Barriere im Rahmen der vorliegenden Erfindung muss nicht zwingend vollkommen starr und unbeweglich sein. Stattdessen wird eine Barriere dann als unbeweglich betrachtet, wenn sie, auch nach Durchführung etwaiger möglicher - insbesondere passiver - Bewegungen, noch immer eine Barriere für ein Bedienfahrzeug darstellt. "Beweglich" und "unbeweglich" wird also in dem Sinne verstanden, dass eine entsprechende Barriere entweder reversibel und zeitweise ("bewegliche Barriere") oder dauerhaft ("unbewegliche Barriere") die Barriere-Funktion ausübt. Eine unbewegliche Barriere kann vorzugsweise nicht zerstörungsfrei in eine Position bewegt werden, welche einem Bedienfahrzeug das Passieren des Raster-Elements erlaubt, auf dem sie befestigt ist.

Eine gewisse Beweglichkeit einer dauerhaft die Barriere-Funktion ausübenden - und somit im Rahmen der vorliegenden Erfindung "unbeweglichen" - Barriere kann durchaus gegeben sein. Hierbei ist insbesondere eine passive Beweglichkeit der unbeweglichen Barriere gemeint. Wenn beispielsweise ein Bedienfahrzeug fehlerbedingt auf die unbewegliche Barriere auffährt, diese also "rammt", so kann die unbewegliche Barriere durchaus verformt werden oder dergleichen. Im Gegensatz zur beweglichen Barriere ist die unbewegliche Barriere jedoch nicht reversibel in eine Position bringbar, welche einem Bedienfahrzeug das Befahren desjenigen Raster-Elements erlaubt, auf welchem die unbewegliche Barriere befestigt ist.

Diesbezüglich sei auf eine unbewegliche Barriere in Form einer Fangnetz-Konstruktion verwiesen. Diese kann als Fangnetz ausgebildet sein, welches von Pfosten oder einem Rahmen oder dergleichen gehalten wird. Das Fangnetz kann ein fehlerhaft auf die Öffnung zu fahrendes Bedienfahrzeug abfangen und dessen kinetische Energie aufnehmen, wobei sich das Fangnetz bewegt. Allerdings sind die Pfosten oder der Rahmen des Fangnetzes nicht versenkbar oder einklappbar oder dergleichen gestaltet, so dass es nicht möglich ist, die Barriere-Funktion des Fangnetzes durch eine Bewegung der Fangnetz-Konstruktion vorübergehend zu deaktivieren.

Eine maximale horizontale Belastbarkeit der unbeweglichen Barriere kann an die maximale zu erwartende Kraft angepasst werden, welche ein Bedienfahrzeug auf die unbewegliche Barriere übertragen kann. Dies hängt von der Beschaffenheit der unbeweglichen Barriere ab, beispielsweise auch ihrer Elastizität, sowie ihrer sonstigen Bauart. Dies hängt weiterhin von der maximalen "Anlauf-Strecke" ab, welche den Bedienfahrzeugen zur Verfügung steht. Dies hängt weiterhin von den Bedienfahrzeugen selbst ab, insbesondere von deren Masse.

Vorzugsweise wird eine Fahrspur dann als "auf die Öffnung zu verlaufend" betrachtet, wenn eine parallel zu dieser Öffnung verlaufende Kante des unmittelbar vor der Öffnung angeordneten Raster-Elements dieser Fahrspur über zumindest 90% ihrer Länge hinweg entlang der Öffnung verläuft. Dieser Verlauf wird im Folgenden der Einfachheit halber auch als "Überlappung" bezeichnet.

Üblicherweise verläuft die vorgenannte Kante dann notwendigerweise auch über zumindest 90% ihrer Länge hinweg entlang der vorzugsweise vorhandenen beweglichen Barriere, welche die Öffnung reversibel verschliesst. Folglich verläuft die vorgenannte Kante demnach vorzugsweise über weniger als 10% ihrer Länge hinweg entlang der äusseren Begrenzung des Fahrspur-Rasters. Somit gilt vorzugsweise, dass bei weniger als 10% Überlappung zwischen der vorgenannten Kante und der äusseren Begrenzung eine unbewegliche Barriere auf der betreffenden Fahrspur angeordnet werden muss.

Eine Überlappung zwischen der Kante und der äusseren Begrenzung von zumindest 10% kann ausreichen, um die kinetische Energie eines Bedienfahrzeugs bei einem Aufprall soweit herabzusetzen, dass dieses Bedienfahrzeug eine hinter der Tür ausserhalb des Fahrspur-Rasters wartende Bedienperson nicht gefährdet. Bei einer Überlappung zwischen der vorgenannten Kante und der äusseren Begrenzung von weniger als 10% besteht eine erhöhte Gefahr, dass das Bedienfahrzeug sich während des Aufpralls mit der äusseren Begrenzung verdreht oder an der äusseren Begrenzung "vorbeirutscht", und anschliessend die vorzugsweise vorhandene bewegliche Barriere überwindet, welche der Öffnung zugeordnet ist.

Ist eine äussere Begrenzung vorhanden, so kann diese beispielsweise als Gitter ausgebildet sein, welches entlang einer Mehrzahl von Pfosten befestigt ist, welche Bestandteil der äusseren Begrenzung sind. In einer solchen Ausführungsform kann die Öffnung sich zwischen zwei solcher Pfosten erstrecken. Diese Pfosten können beispielsweise Laufschienen für eine vorzugsweise vorhandene bewegliche Barriere in Form eines Rolltors umfassen oder als Türzarge für eine bewegliche Barriere in Form einer Tür dienen. Insbesondere solche Pfosten oder dergleichen können bei einem Aufprall eines Bedienfahrzeugs einen signifikanten Anteil der kinetischen Energie aufnehmen.

Alternativ zu dem vorbeschriebenen Ausführungsbeispiel kann daran gedacht sein, eine Fahrspur bereits dann als "auf die Öffnung zu verlaufend" zu betrachten, wenn die vorgenannte Kante des unmittelbar vor der Öffnung angeordneten Raster-Elements über zumindest 80% ihrer Länge hinweg entlang der Öffnung verläuft. In dieser Ausführungsform muss also vorzugsweise bereits dann eine unbewegliche Barriere auf der betreffenden Fahrspur angeordnet werden, wenn die Kante des vorgenannten Raster-Elements zu weniger als 20% mit der äusseren Begrenzung überlappt.

In weiteren alternativen Ausführungsbeispielen kann daran gedacht sein, dass die vorgenannte Kante weniger als 30% mit der äusseren Begrenzung überlappen muss, damit die betreffende Fahrspur als "auf die Öffnung zu verlaufend" betrachtet wird. Weiter alternativ kann an Überlappungen von weniger als 40% oder von weniger als 50% oder von weniger als 55% oder von weniger als 60% mit der äusseren Begrenzung gedacht sein, damit die betreffende Fahrspur als "auf die Öffnung zu verlaufend" betrachtet wird. Bei den vorgenannten alternativen Ausführungsbeispielen steigt die Sicherheit für die Bedienperson in der genannten Reihenfolge der Ausführungsbeispiele an. Diese Bedienperson wartet üblicherweise hinter der Öffnung, vorzugsweise hinter der die Öffnung reversibel verschliessenden beweglichen Barriere, um beispielsweise Wartungs- oder Reparaturarbeiten durchzuführen.

Wenn jede Fahrspur als "auf die Öffnung zu verlaufend" betrachtet und mit einer unbeweglichen Barriere ausgestattet, sobald sie - gemäss dem letztgenannten Ausführungsbeispiel - über nur zumindest 40% ihrer Länge hinweg entlang der Öffnung verläuft, so bedeutet dies ein besonders hohes Mass an Sicherheit.

Die vorstehenden Überlegungen gelten natürlich analog für Blocklagersysteme, deren Öffnungen keine beweglichen Barrieren zugeordnet sind.

Das Blocklagersystem kann eine oder mehrere bewegliche Barriere(n) umfassen. Beispielsweise können mehrere Öffnungen vorhanden sein, welche jeweils von einer beweglichen Barriere reversibel verschlossen werden. Ferner kann angedacht sein, dass eine einzige Öffnung von mehr als einer beweglichen Barriere reversibel verschlossen wird. Weiterhin können bewegliche Barrieren beispielsweise, insbesondere zusammen mit unbeweglichen Barrieren, eine Schleuse auf dem Fahrspur-Raster bilden. Dies wird nachstehend näher erläutert.

Das Blocklagersystem kann eine Schleuse umfassen, welche von zumindest einer beweglichen Barriere und zumindest einer unbeweglichen Barriere gebildet wird.

Der Wartungs- und Entnahme-Raum kann von einer Wartungs-Plattform umgeben sein. Der Wartungs- und Entnahme-Raum und, falls vorhanden, vorzugsweise auch die Wartungs-Plattform, befinden sich vorzugsweise auf derselben Höhe innerhalb des Blocklagersystems wie das Fahrspur-Raster. Die unbewegliche Barriere bietet ausreichend Sicherheit, so dass ein Ebenen-Versatz zum Schutz der Bedienperson nicht nötig ist.

Soll die unbewegliche Barriere ausschliesslich eine geradlinige Fahrt eines Bedienfahrzeugs auf die Öffnung zu verhindern, so kann daran gedacht sein, die Barriere lediglich auf einem einzigen Raster-Element auf der Fahrspur zu montieren, welche auf die Öffnung zu verläuft. Hierbei meint eine auf die Öffnung zu verlaufende Fahrspur vorzugsweise zumindest diejenige, auf welcher sich ein Bedienfahrzeug bei einer Geradeausfahrt auch durch die Öffnung hindurchbewegen könnte.

Soll die unbewegliche Barriere hingegen auch verhindern, dass das Bedienfahrzeug auf einer parallel zur Längsrichtung der Öffnung verlaufenden Fahrspur unmittelbar an der Öffnung vorbeifährt, so können zumindest eine weitere unbewegliche Barriere oder ein Abschnitt oder Teil-Abschnitt der unbeweglichen Barriere auf weiteren Raster-Elementen montiert sein.

Ähnliches gilt, wenn die unbewegliche Barriere auch verhindern soll, dass das Bedienfahrzeug sich der Öffnung auf einer Fahrspur nähert, welche parallel zu der auf die Öffnung zu verlaufenden Fahrspur nähert, beispielsweise auf einer Fahrspur, welche parallel und unmittelbar neben der auf die Öffnung zu verlaufenden Fahrspur verläuft, und unmittelbar neben der Öffnung beispielsweise angrenzend an eine Begrenzung oder Trenn-Einrichtung endet. Auch in diesem Fall kann eine weitere unbewegliche Barriere oder zumindest ein Teil-Abschnitt der unbeweglichen Barriere auf weiteren Raster-Elementen montiert sein.

In sämtlichen Ausführungsformen der vorliegenden Erfindung kann also angedacht sein, dass ein Teilabschnitt einer unbeweglichen Barriere auch zumindest auf denjenigen Fahrspuren angeordnet ist, welche parallel und unmittelbar neben der auf die Öffnung zu verlaufenden Fahrspur verlaufen. Der Abstand zwischen dem Barriere-tragenden Raster-Element auf diesen benachbarten Fahrspuren und beispielsweise dem unmittelbar an die Öffnung angrenzenden Abschnitt der äusseren Begrenzung beträgt vorzugsweise ebenfalls maximal vier Raster-Elemente. Der Teilabschnitt der unbeweglichen Barriere, welcher auf einem Raster-Element der vorgenannten parallel und benachbarten Fahrspuren angeordnet ist, muss nicht zwingend ein Teilabschnitt derselben unbeweglichen Barriere sein, deren Teil-Abschnitt auf der unmittelbar auf die Öffnung zu verlaufenden Fahrspur angeordnet ist.

Allgemein kann also festgestellt werden, dass an verschiedene Grössen oder Abmessungen einer unbeweglichen Barriere, welche beispielsweise als Wand oder Poller oder Prellbock ausgeführt sein kann, gedacht sein kann. Die unbewegliche Barriere kann hierbei auf einem einzigen Raster-Element montiert sein, oder sich über mehrere, vorzugsweise benachbarte Raster-Elemente erstrecken.

Die unbewegliche Barriere kann ausgewählt sein aus der Gruppe umfassend eine Wand, einen Pfosten, einen Poller, einen Prellbock und eine Fangnetz-Konstruktion. Weitere Alternativen sind denkbar.

Das automatisierte Blocklagersystem kann, wie bereits erwähnt, eine das Fahrspur-Raster umgebende äussere Begrenzung umfassen. Diese äussere Begrenzung kann abschnittsweise im Wesentlichen parallel zu zumindest einer Fahrspur verlaufen.

Das automatisierte Blocklagersystem kann, wie bereits erwähnt, eine weitere unbewegliche Barriere umfassen. Zumindest ein Teil-Abschnitt dieser weiteren unbeweglichen Barriere kann auf dem Fahrspur-Raster auf einer parallel zu einer Längsrichtung der Öffnung und unmittelbar benachbart zu der Öffnung verlaufenden Fahrspur in einem solchen Abstand von der Öffnung auf einem Raster-Element angeordnet sein, dass zwischen diesem Raster-Element und einem unmittelbar an die Öffnung angrenzenden Raster-Element maximal vier Raster-Elemente liegen. Es kann auch daran gedacht sein, dass der vorgenannte Abstand maximal drei oder maximal zwei Raster-Elemente beträgt. Der Abstand kann auch nur ein Raster-Element betragen. Der zumindest eine Teil-Abschnitt der weiteren unbeweglichen Barriere kann auch auf einem Raster-Element angeordnet sein, welches unmittelbar an dasjenige Raster-Element angrenzt, welches unmittelbar an die Öffnung angrenzt.

Das automatisierte Blocklagersystem kann eine im Wesentlichen einstückige unbewegliche Barriere mit zumindest zwei Abschnitten umfassen. Hierbei ist vorzugsweise zumindest ein Teil-Abschnitt von einem der Abschnitte auf dem Fahrspur-Raster auf einer parallel zu einer Längsrichtung der Öffnung und unmittelbar benachbart zu der Öffnung verlaufenden Fahrspur in einem solchen Abstand von der Öffnung auf dem Raster-Element angeordnet, dass zwischen diesem Raster-Element und einem unmittelbar an die Öffnung angrenzenden Raster-Element maximal vier Raster-Elemente liegen. Es kann auch daran gedacht sein, dass der vorgenannte Abstand maximal drei oder maximal zwei Raster-Elemente beträgt. Der Abstand kann auch nur ein Raster-Element betragen. Der zumindest eine Teil-Abschnitt der weiteren unbeweglichen Barriere kann auch auf einem Raster-Element angeordnet sein, welches unmittelbar an dasjenige Raster-Element angrenzt, welches unmittelbar an die Öffnung angrenzt.

**Einzelheiten betreffend das vorstehend beschriebene Blocklagersystem gelten auch für das nachstehend beschriebene Verfahren und umgekehrt.**

Gemäss einem Verfahren zum Betreiben einer Ausführungsform des vorbeschriebenen Blocklagersystems verkehrt zumindest ein Bedienfahrzeug auf dem Fahrspur-Raster.

Es kann daran gedacht sein, dass ein Wechsel eines Bedienfahrzeugs von dem Fahrspur-Raster auf ein weiteres Fahrspur-Raster oder in einen Wartungs- und Entnahme-Raum erfolgt, indem das Bedienfahrzeug die Öffnung durchquert, wobei das Bedienfahrzeug zuvor zwischen der Öffnung und der Barriere auf die auf die Öffnung zu verlaufende Fahrspur auffährt, um anschliessend die Öffnung zu durchqueren.

Weiterhin kann daran gedacht sein, dass zumindest eines der Bedienfahrzeuge auf dem Fahrspur-Raster in einem Automatik-Betrieb verbleibt, nachdem ein anderes Bedienfahrzeug zwecks Wartung oder Reparatur in den Wartungs- und Entnahmeraum eingefahren ist und dort gewartet oder repariert wird.

Eine Reparatur oder Wartung kann also beispielsweise entweder von einer im Wartungs- und Entnahme-Raum wartenden oder dort während der Reparatur oder Wartung verbleibenden Bedienperson vorgenommen werden, während sich das Bedienfahrzeug auf dem Fahrspur-Raster befindet. Alternativ kann der Wartungs- und Entnahme-Raum als Werkstatt dienen, in welche auch das Bedienfahrzeug, zumindest teilweise, einfährt.

Soll die vorzugsweise von einer beweglichen Barriere reversibel verschlossene Öffnung ausschliesslich dazu dienen, einer Bedienperson im Bedarfsfall Zutritt auf das Fahrspur-Raster zu gewähren, so kann ausserhalb des Fahrspur-Rasters eine Wartungs-Plattform vorgesehen sein, welche an die Öffnung angrenzt, und nach dem Öffnen der beweglichen Barriere der Bedienperson den Zutritt gewährt.

Die Bedienfahrzeuge der vorstehend beschriebenen Blocklagersysteme verkehren üblicherweise im Automatik-Betrieb. Insbesondere werden sie also nicht von einem Fahrer gesteuert, sondern erfüllen automatisch, gesteuert durch beispielsweise ein Lagerverwaltungssystem oder dergleichen, ihre Aufträge, während sie sich auf dem Fahrspur-Raster bewegen.

Während der Wartung oder Reparatur kann zumindest eines der Bedienfahrzeug im Automatik-Betrieb verbleiben, sofern sich keine Bedienperson auf dem Fahrspur-Raster befindet. Vorzugsweise können sämtliche Bedienfahrzeuge im Automatik-Betrieb verbleiben. Dies wird ermöglichst, da eine Bedienperson durch die unbewegliche Barriere vor Verletzungen eines fehlerhaft und mit hoher Geschwindigkeit in den Wartungs- und Entnahme-Raum einfahrenden Bedienfahrzeugs geschützt ist.

Es kann angedacht sein, dass zumindest eines der Bedienfahrzeuge auf dem Fahrspur-Raster in einem Automatik-Betrieb verbleibt, bis eine die Öffnung reversibel verschliessende bewegliche Barriere, welche einer Bedienperson Zutritt zu dem Fahrspur-Raster gewährt, geöffnet wird. Obwohl sich also beispielsweise eine Bedienperson bereits auf einer Wartungsplattform, Bühne oder dergleichen befindet, welche unmittelbar an die vorgenannte Öffnung angrenzt, müssen die Bedienfahrzeuge auf dem Fahrspur-Raster erst gestoppt werden, sobald die Bedienperson das Fahrspur-Raster tatsächlich betritt. Ein vorheriges Stoppen der Bedienfahrzeuge, welche den Durchsatz des Blocklagersystems verringern würde, ist nicht nötig, da die wartende Bedienperson dank der unbeweglichen Barriere vor fehlerhaft in die Öffnung einfahrenden Bedienfahrzeugen geschützt ist.

### Figurenbeschreibung

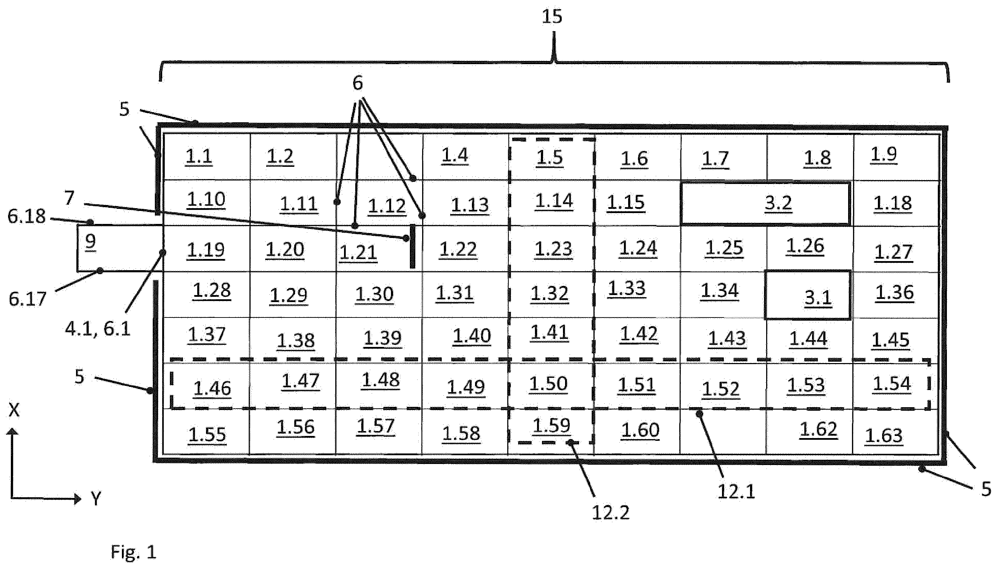

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in den Figuren 1 bis 13 Ausführungsformen eines Blocklagersystems.

Der besseren Übersicht halber sind nicht sämtliche Bezugsziffern in sämtlichen Figuren angegeben. Die Figuren zeigen jeweils eine Draufsicht auf zumindest einen Teil eines Blocklagersystems. Etwaige (nicht dargestellte) Schächte mit vertikal gestapelten Ladeeinheiten würden also orthogonal zur Zeichenfläche verlaufen.

### Ausführungsbeispiel

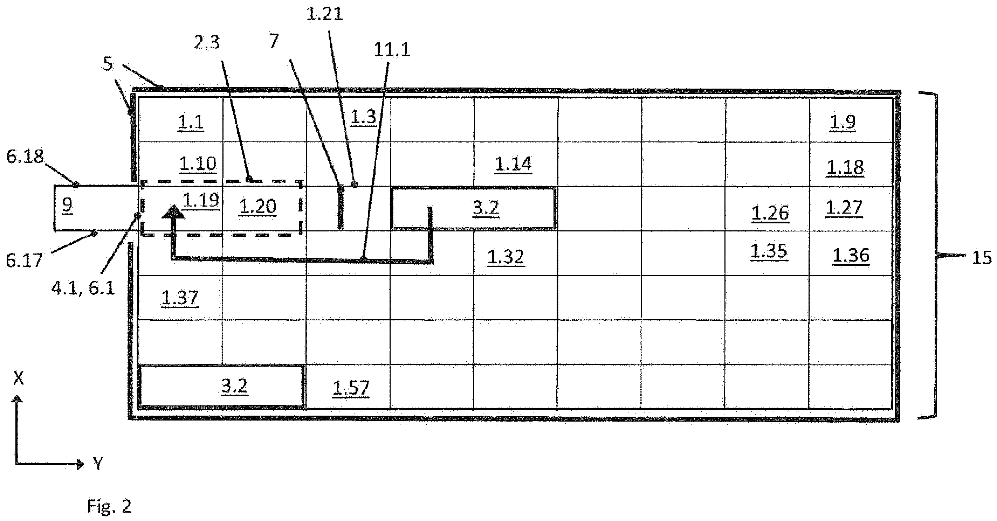

**Figur 1** zeigt eine Draufsicht auf ein Fahrspur-Raster 15 eines automatisierten Blocklagersystems. Die meisten der dreiundsechzig abgebildeten Raster-Elemente 1.1, 1.2, ..., 1.63 sind mit Bezugsziffern gekennzeichnet. Die Raster-Elemente 1 sind in den Figuren 1 bis 4 und 9 bis 10 zeilenweise von oben nach unten durchnummeriert, wobei in den Figuren 2, 3, 4, 9 und 10 nur einige wenige der Raster-Element mit Bezugsziffern 1.1, 1.2, ..., 1.63 versehen sind. Ferner sind in Figur 1 Kanten 6 des Raster-Elements 1.12 sowie eine parallel zur x-Richtung verlaufende Kante 6.1 des Raster-Elements 1.19 gekennzeichnet. Beispielhaft sind zwei Fahrspuren 12.1, 12.2 mit Bezugsziffern gekennzeichnet, welche jeweils von mehreren fluchtend hintereinander in x- oder y-Richtung liegenden Raster-Elementen 1.5, 1.14, ..., 1.50, 1.59 bzw. 1.46, 1.47, ..., 1.53, 1.54 gebildet sind. Die vorgenannten Fahrspuren 12.1, 12.2 verlaufen orthogonal zueinander. Sämtliche (nicht separat eingezeichneten) Fahrspuren 12 auf dem Fahrspur-Raster 15 werden von fluchtend hintereinander in x- oder y-Richtung angeordneten Raster-Elementen 1 gebildet. Das nur schematisch und beispielhaft in Figur 1 dargestellte Fahrspur-Raster 15 umfasst sieben parallel zur y-Richtung und jeweils parallel zueinander verlaufende Fahrspuren 12, von denen nur die Fahrspur 12.1 mit einer Bezugsziffer versehen ist. Ferner umfasst das in Figur 1 dargestellte Fahrspur-Raster 15 neun parallel zur x-Richtung und jeweils parallel zueinander verlaufende Fahrspuren 12, von denen nur die Fahrspur 12.2 mit einer Bezugsziffer versehen ist.

Die orthogonal zueinander angeordneten Fahrspuren 12.1, 12.2 kreuzen sich auf dem Raster-Element 1.50. Zu der Fahrspur 12.1 existieren in Figur 1 sechs parallel verlaufende Fahrspuren, zu der Fahrspur 12.2 existieren in Figur 1 acht parallel verlaufende Fahrspuren, die jeweils nicht mit Bezugsziffern versehen sind.

In Figur 1 sind ausserdem zwei Bedienfahrzeuge 3.1, 3.2, eine unbewegliche Barriere in Form einer im Wesentlichen parallel zur x-Richtung verlaufenden Wand 7 und eine Öffnung 4.1 innerhalb einer das Fahrspur-Raster 15 umgebenden äusseren Begrenzung 5 dargestellt. Hinter der Öffnung 4.1 ist ein Wartungs- und Entnahme-Raum 9 erkennbar. Ähnlich der Raster-Elemente 1 umfasst der Wartungs- und Entnahme-Raum zwei Fahrschienen-bildende Kanten 6.17, 6.18.

Die Öffnung 4.1 erstreckt sich parallel zur x-Richtung, wobei sie im Wesentlichen dieselbe Ausdehnung in x-Richtung aufweist, wie eine Kante 6.1 des Raster-Elements 1.19 und entlang dieser Kante 6.1 verläuft.

Aus Figur 1 geht hervor, dass die dort gezeigten fünf Abschnitte der äusseren Begrenzung 5, welche nur in _Figur 1 vollständig mit Bezugsziffern versehen sind, jeweils parallel entweder zur Fahrspur 12.1 oder zur Fahrspur 12.2 verlaufen.

Die Wand 7 ist auf dem Raster-Element 1.21 angeordnet.

In **Figur 2** sind das Fahrspur-Raster 15 im Wesentlichen gemäss Figur 1 sowie zwei Bedienfahrzeuge 3.2 dargestellt. Für eines der Bedienfahrzeuge 3.2 ist ein Fahrweg 11.1 durch einen Pfeil angedeutet. Ein geradliniger Fahrweg 2.3 ist ebenfalls angedeutet.

Im Allgemeinen sind geradlinig verlaufende Fahrwege 2, also Abschnitte der Fahrspuren 12, in den Figuren als gestrichelt markierte Abschnitte gekennzeichnet. Fahrwege, die nicht geradlinig verlaufen, sondern Richtungswechsel der Bedienfahrzeuge 3.1, 3.2 beinhalten, sind hingegen mit einem Pfeil 11 gekennzeichnet.

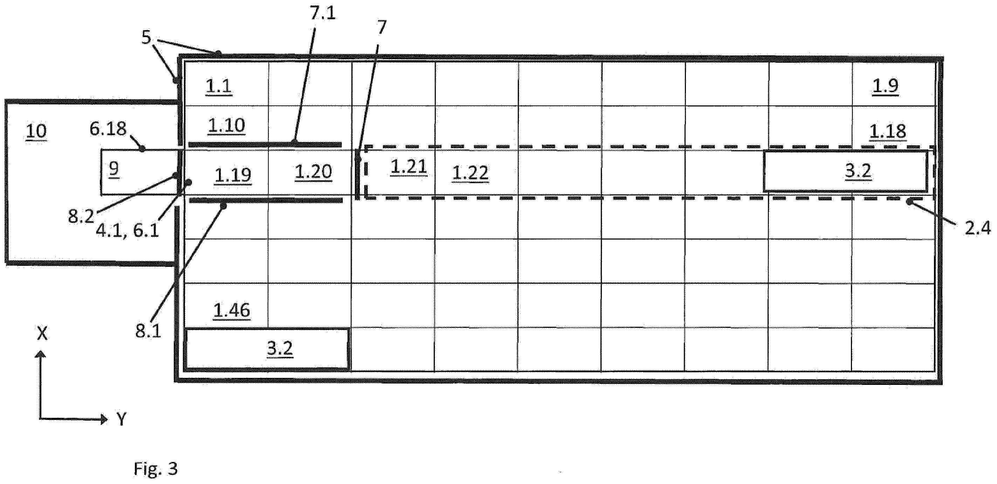

**Figur 3** zeigt eine Draufsicht auf ein Blocklagersystem mit einem (hier nicht mit Bezugsziffer versehenen) Fahrspur-Raster 15, wobei das Blocklagersystem in dem Fahrspur-Raster 15 im Vergleich zu demjenigen gemäss den Figuren 1 und 2 zusätzlich eine weitere unbewegliche Barriere in Form einer Wand 7.1 und zwei bewegliche Barrieren 8.1, 8.2 umfasst. Im Vergleich zur Figur 2 verschliessen die Wand 7.1 und die bewegliche Barriere 8.1 den in Figur 2 dargestellten geradlinigen Fahrweg 2.3. Dieser wurde in Figur 3 der besseren Übersicht halber nicht gesondert eingezeichnet. Die bewegliche Barriere 8.2 verschliesst die Öffnung 4.1. Ferner sind in Figur 3 ein geradliniger Fahrweg 2.4 sowie eine Wartungs-Plattform 10 dargestellt.

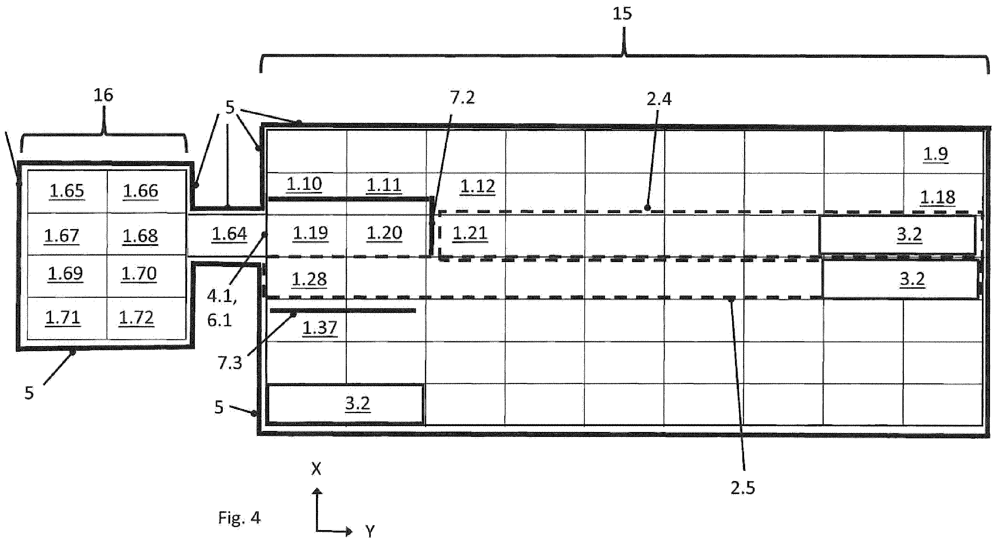

**Figur 4** zeigt eine Draufsicht auf ein Blocklagersystem mit einem Fahrspur-Raster 15, wobei das Blocklagersystem im Vergleich zu demjenigen gemäss Figur 3 eine alternativ gebaute unbewegliche Barriere in Form einer Wand 7.2 sowie eine weitere unbewegliche Barriere in Form einer weiteren Wand 7.3 umfasst. Ferner sind zwei geradlinige Fahrwege 2.4, 2.5 dargestellt. Anstelle der in Figur 3 dargestellten Wartungs-Plattform 10 umfasst das Blocklagersystem nach Figur 4 hinter der Öffnung 4.1 ein weiteres Fahrspur-Raster 16. Die Wand 7.2 des in Figur 4 gezeigten Blocklagersystems ist im Vergleich zu der Wand 7.1 gemäss den Figuren 1 bis 3 L-förmig gewinkelt und verläuft auf den Raster-Elementen 1.21, 1.12, 1.11, 1.10. Die Wand 7.2 ist also eine aus zwei Abschnitten bestehende Barriere, wobei ein parallel zur y-Richtung verlaufender Abschnitt dieser Wand 7.2 auf den Raster-Elementen 1.10, 1.11, 1.12 angeordnet ist, und ein weiterer, parallel zur x-Richtung verlaufender Abschnitt auf den Raster-Elementen 1.12, 1.21. Der letztgenannte Abschnitt der Wand 7.2 verläuft parallel zu einer Längsrichtung der Öffnung 4.1 und parallel zu einer unmittelbar benachbart zu der Öffnung 4.1 verlaufenden (nicht separat eingezeichneten) Fahrspur 12, welche sich von dem Raster-Element 1.1 zu dem Raster-Element 1.55 erstreckt. Zwischen dem Raster-Element 1.21, auf dem ein Teil-Abschnitt des parallel zur x-Richtung verlaufenden Abschnitts der Wand 7.2 angeordnet ist, und dem unmittelbar an die Öffnung 4.1 angrenzenden Raster-Element 1.19 liegt lediglich das Raster-Element 1.20.

Raster-Elemente 1.64, ..., 1.72 des weiteren Fahrspur-Rasters 16 sind mit Bezugsziffern gekennzeichnet.

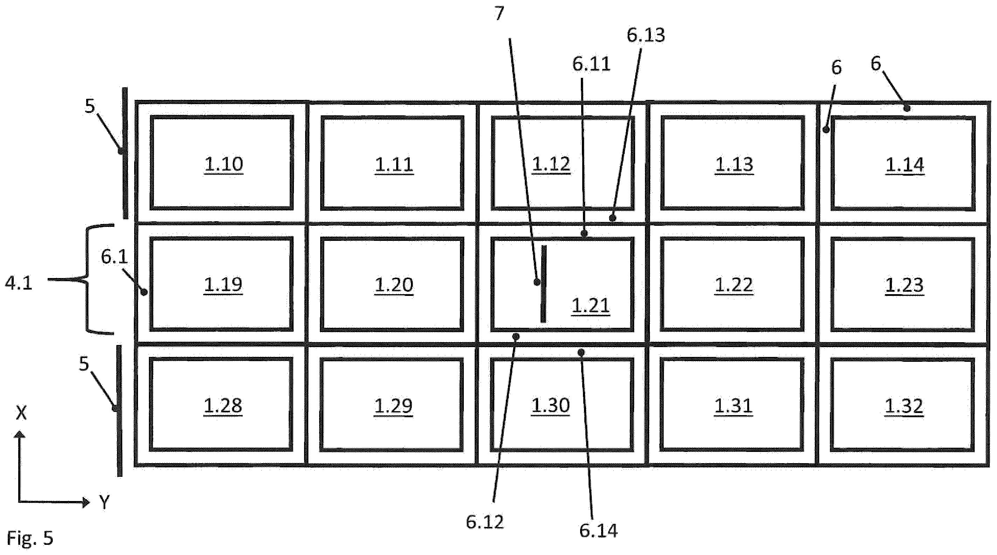

**Figur 5** zeigt unter anderem eine vergrösserte Darstellung einiger Raster-Elemente 1.10, 1.11, 1.12, 1.13, 1.14; 1.19, 1.20, 1.21, 1.22, 1.23; 1.28, 1.29, 1.30, 1.31, 1.32 sowie eine Wand 7 auf dem Raster-Element 1.21. Zahlreiche Details der Figuren 1 bis 4 wurden in der Figur 5, welche nur einen Ausschnitt darstellt, weggelassen.

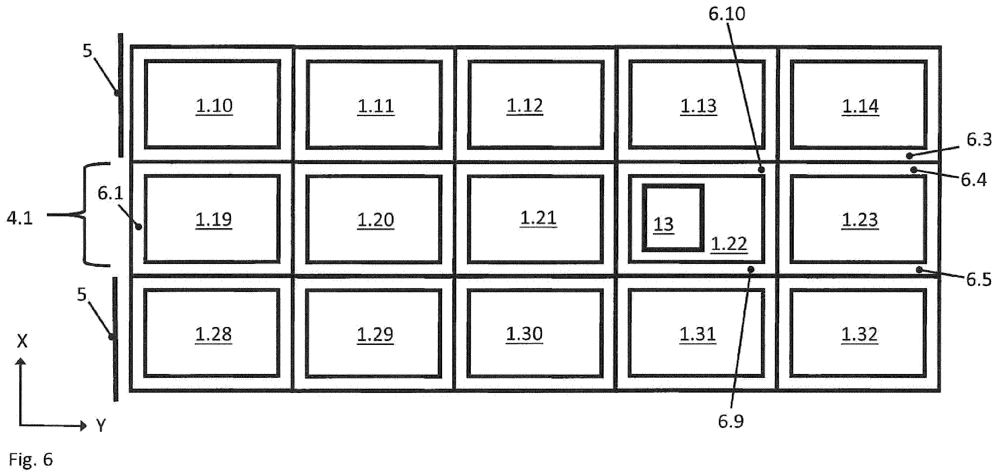

Im Hinblick sowohl auf die Figur 5 als auch auf die Figuren 6 bis 8 sei angemerkt, dass eine Befestigung der dort gezeigten Barrieren 7, 7.2, 13, 14 nicht dargestellt ist. Diese Befestigung kann auf beliebige geeignete Weise erfolgen, wobei sie vorzugsweise derart erfolgt, dass die zu dem jeweils "Barriere-tragenden" Raster-Element 1 benachbarte Raster-Elemente 1 weiterhin befahrbar sind. In Bezug auf Figur 5 sind also die Raster-Elemente 1.11, 1.12, 1.13, 1.20, 1.22, 1.29, 1.30, 1.31 weiterhin von Bedienfahrzeugen 3.1, 3.2 befahrbar, und nur das Barriere-tragende Raster-Element 1.21, auf welchem die Wand 7 befestigt ist, ist nicht befahrbar.

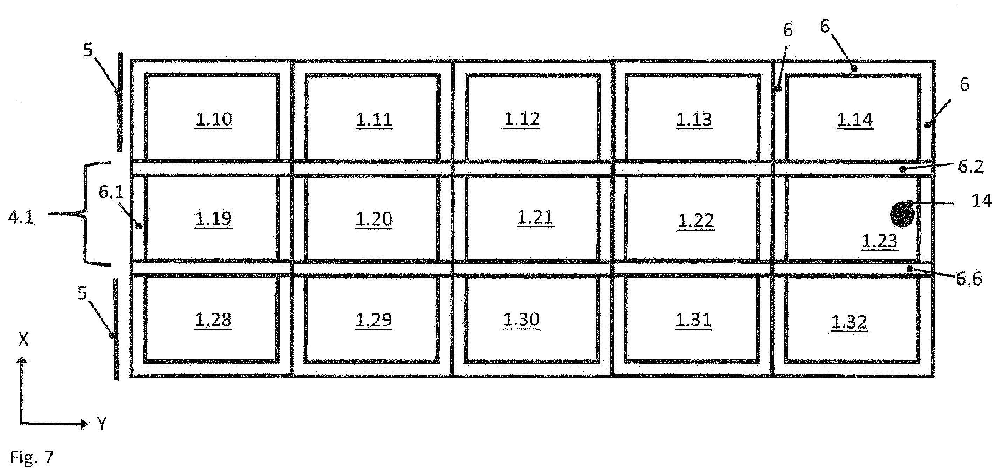

Wie nachstehend näher erläutert, bilden die Kanten 6 Fahrschienen-Abschnitte. Die Kanten 6.11, 6.12, welche in der Anordnung nach Figur 5 unmittelbar an das Raster-Element 1.21 angrenzen, könnten (entgegen der Darstellung in Figur 5) durch die Wand 7 blockiert sein, ohne dass die Kanten 6.13, 6.14 der in x-Richtung benachbart angeordneten Raster-Elemente 1.12, 1.30 tangiert wären. In der Anordnung nach Figur 7, bei welcher sich die Raster-Elemente 1.14, 1.32 jeweils eine Kante 6.2, 6.6 mit dem Raster-Element 1.23 teilen, darf die Barriere 14 nicht so ausgebildet sein, dass diese "geteilten" Kanten 6.2, 6.6 blockiert sind.

Vorzugsweise verhindert jede Barriere 7, 7.2, 13, 14 jeweils nur das Befahren derjenigen Kanten 6 bzw. Fahrschienen-Abschnitte, welche ausschliesslich dem Barriere-tragenden Raster-Element 1 zugeordnet sind, wohingegen "geteilte" Kanten 6 vorzugsweise stets befahrbar bleiben. Das "Barrieretragende" Raster-Element, in den Figuren 5 bis 7 also jeweils eines der Raster-Elemente 1.21, 1.22, 1.23, sind jedoch in jedem Fall nicht befahrbar.

**Figur 6** zeigt eine Darstellung ähnliche derjenigen nach Figur 5. Allerdings ist als Barriere ein Prellbock 13 auf dem Raster-Element 1.22 angeordnet. Weiterhin sind in Figur 6 zwei Kanten 6.4, 6.5 des Raster-Elements 1.23, zwei Kanten 6.9, 6.10 des Raster-Elements 1.22 sowie eine Kante 6.3 des Raster-Elements 1.14 mit Bezugsziffern versehen. Alle vorgenannten Kanten 6.3, 6.4, 6.5, 6.9, 6.10 verlaufen parallel zur y-Richtung.

**Figur 7** zeigt abermals eine Darstellung ähnlich derjenigen nach Figur 5. Allerdings ist als Barriere ein Poller 14 auf dem Raster-Element 1.23 angeordnet. Ferner teilen sich bei der Anordnung nach Figur 7 die in x-Richtung benachbarten Raster-Elemente 1 jeweils die parallel zur y-Richtung verlaufende Kante 6. Eine solche "geteilte" Kante 6.2 ist für die in x-Richtung benachbarten Raster-Elemente 1.14, 1.23 angedeutet, ebenso die Kante 6.6 der ebenfalls in x-Richtung benachbarten Raster-Elemente 1.23, 1.32. In Figur 6 ist demgegenüber erkennbar, dass die in x-Richtung benachbarten Raster-Elemente 1.14, 1.23 sowie die ebenfalls in x-Richtung benachbarten Raster-Elemente 1.23, 1.32 jeweils "ihre eigenen" Kanten 6.3, 6.4, 6.5 aufweisen.

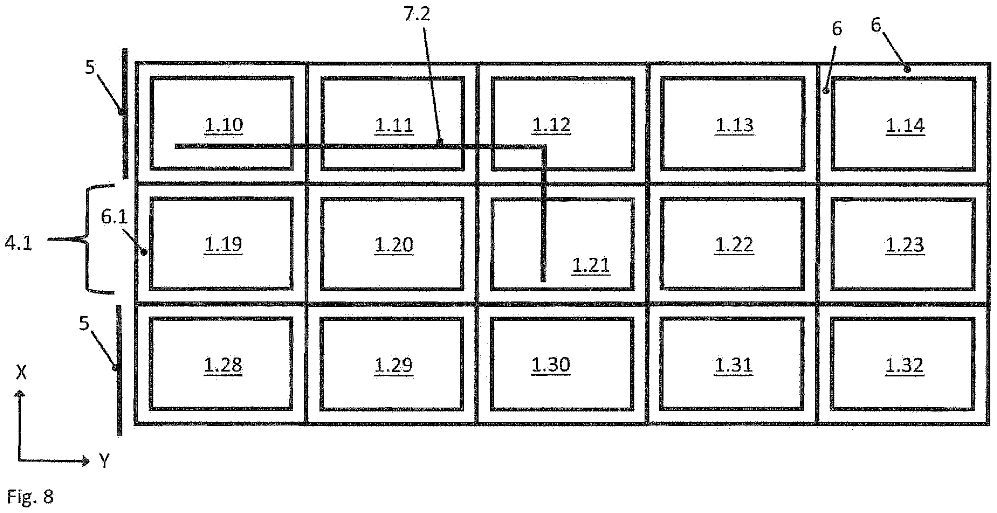

**Figur 8** zeigt wiederum eine Darstellung ähnlich derjenigen nach Figur 5. Die in Figur 8 dargestellte Wand 7.2 ist L-förmig ausgebildet und verläuft auf den Raster-Elementen 1.21, 1.12, 1.11, 1.10. Die Wand 7.2 besteht aus zwei Abschnitten, nämlich den (nicht mit Bezugsziffern versehenen) Schenkeln der vorgenannten L-Form.

Ein (nicht mit Bezugsziffern versehener) Teil-Abschnitt des parallel zur x-Richtung verlaufenden Schenkels ist auf dem Raster-Element 1.21 angeordnet, ein weiterer (ebenfalls nicht mit Bezugsziffern versehener) Teil-Abschnitt desselben Schenkels ist auf dem Raster-Element 1.12 angeordnet. Drei (ebenfalls nicht mit Bezugsziffern versehene) Teil-Abschnitte des parallel zur y-Richtung verlaufenden anderen Schenkels sind jeweils auf den Raster-Elementen 1.10, 1.11, 1.12 angeordnet.

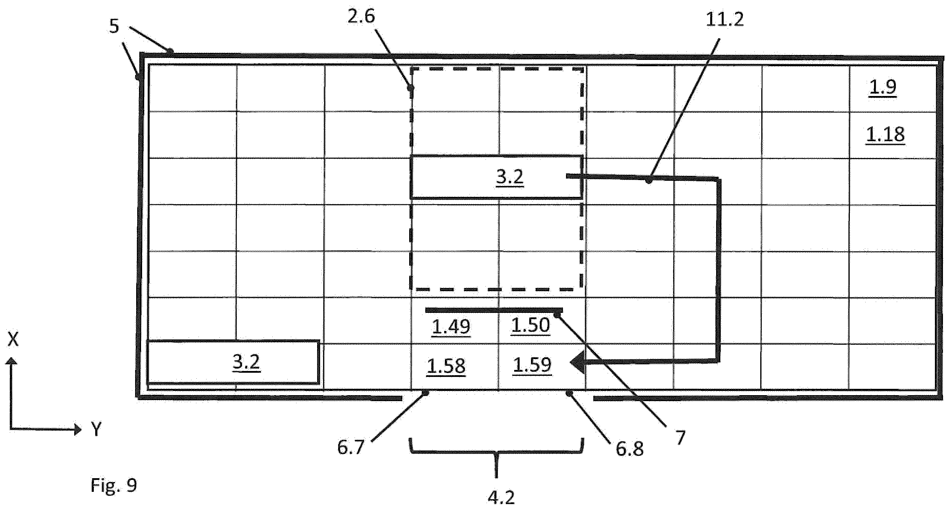

Die Öffnung 4.2 des in **Figur 9** dargestellten Blocklagersystems erstreckt sich im Unterschied zu den Öffnungen 4.1 gemäss den Figuren 1 bis 8 parallel zur y-Richtung entlang der Kanten 6.7, 6.8, welche zu den Raster-Elementen 1.58, 1.59 gehören. Das links unten in Figur 8 dargestellte Bedienfahrzeug 3.2 kann nicht "mit Anlauf" in die Öffnung 4.2 einfahren, da es vor einem solchen Einfahren in negativer x-Richtung zuvor entlang der y-Richtung auf die Raster-Elemente 1.58, 1.59 auffahren und dort zwecks Richtungswechsel zum Stillstand kommen muss. Es steht somit keine relevante "Anlauf-Strecke" zur Verfügung.

Analoges gilt für das weiter oben in Figur 9 dargestellte Bedienfahrzeug 3.2, dessen auf die Raster-Elemente 1.58, 1.59 zu verlaufender Fahrweg durch einen Pfeil 11.2 angedeutet ist. Dieses Bedienfahrzeug 3.2 kann nicht von der in Figur 9 dargestellten Position entlang der negativen x-Richtung "mit Anlauf" durch die Öffnung 4.2 hindurchfahren, weil die Wand 7 auf den Raster-Elementen 1.49, 1.50 dies verhindert.

Auf die Darstellung beispielsweise eines Wartungs- und Entnahmeraums 9 oder eines weiteren Fahrspur-Rasters 16 oder einer Wartungs-Plattform 10, welcher bzw. welches sich an die Öffnung 4.2 anschliesst, wurde in Figur 9 der besseren Übersicht halber verzichtet.

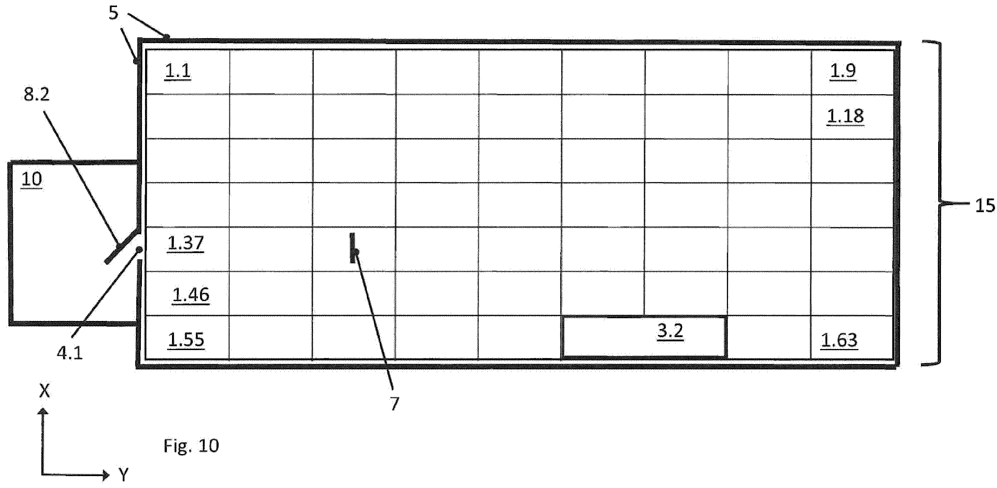

Das in **Figur 10** dargestellte Blocklagersystem unterscheidet sich von demjenigen nach Figur 3 durch die Anordnung der Öffnung 4.1 sowie der als geöffnete Tür dargestellten beweglichen Barriere 8.2 neben dem Raster-Element 1.37. Weiterhin unterscheidet sich das in Figur 9 gezeigte Blocklagersystem dahingehend von den Blocklagersystemen gemäss den Figuren 1 bis 4, dass eine Durchfahrt der Bedienfahrzeuge 3.1, 3.2 durch die Öffnung 4.1 in der Anordnung nach Figur 10 nicht vorgesehen ist. Vielmehr dient die Wartungs-Plattform 10, welche beispielsweise über eine (nicht dargestellte) Treppe erreichbar ist, ausschliesslich dazu, einer Bedienperson über die Öffnung 4.1 einen Zugang auf das Fahrspur-Raster 15 zu gewähren.

In den **Figuren 11** **und** **12** ist jeweils eine vergrösserte Ansicht von einigen in den Figuren 5 bis 8 dargestellten Raster-Elemente 1.10, 1.11, ..., 1.32 dargestellt. Der wesentliche Unterschied zu der Anordnung nach Figur 5 besteht jeweils in einer Ausdehnung der Öffnung 4.1 und der beweglichen Barriere 8.2 in x-Richtung.

In **Figur 13** ist ein Ausschnitt eines Teils der Figur 12 vergrössert dargestellt.

**Bezugnehmend auf die** **Figuren 1 bis 13** **erklären sich die Funktionsweise der erfindungsgemässen Vorrichtung sowie das erfindungsgemässe Verfahren folgendermassen:**
Die Bedienfahrzeuge 3.1, 3.2 fahren automatisch entlang der geradlinigen Fahrwege 2, 2.1, 2.2, 2.3, 2.4, 2.5, 2.6 und somit parallel zur x- oder zur y-Richtung auf dem Fahrspur-Raster 15. Fluchtend angeordnete Kanten 6 von hintereinander angeordneten Raster-Elementen 1 bilden diese geradlinigen Fahrwege 2. Richtungswechsel nach einem Stillstand sind möglich, was nachstehend noch näher beschrieben wird. Diagonale Fahrten, welche nicht entweder parallel zur y-Richtung oder parallel zur x-Richtung verlaufen, sind jedoch nicht möglich.

Insbesondere aus den Figuren 5 bis 8 geht hervor, dass parallel verlaufende Kanten 6, 6.1, ..., 6.14 jedes Raster-Elements 1 Fahrschienen-Paar-Abschnitte bilden. Fluchtend hintereinander angeordnete parallel verlaufende Kanten 6 von Raster-Elementen 1 bilden somit Fahrschienen-Paare, welche parallel entweder zur x- oder zur y-Richtung verlaufen.

Ein solches Fahrschienen-Paar wird beispielsweise unter anderem aus den in Figur 6 dargestellten Kanten 6.4, 6.5, 6.9, 6.10 gebildet. Die Fahrspur, welche durch das vorgenannte Fahrschienen-Paar entlang der Raster-Elemente 1.23, 1.22, 1.21, 1.20, 1.19 gebildet wird, verläuft unmittelbar auf die Öffnung 4.1 in Figur 6 zu. Auf dieser Fahrspur könnte ein Bedienfahrzeug 3.2 also in die Öffnung 4.1 in Figur 6 einfahren, sofern diese Fahrt "links" (in Bezug auf Figur 6) von dem Prellbock 13 beginnt, also auf einem der Raster-Elemente 1.19, 1.20, 1.21.

Jeder, beispielsweise durch die Pfeile in den Figuren 2 und 9 angedeutete Fahrweg 11.1, 11.2 setzt sich aus geradlinigen Fahrwegen 2 zusammen, wobei aneinandergrenzende geradlinige Fahrwege 2 orthogonal zueinander verlaufen. Diagonale oder andere Anordnungen der Fahrwege sind, wie bereits erwähnt, nicht möglich.

Hierbei bezieht sich der Begriff "Fahrweg" auf einen tatsächlich von einem Bedienfahrzeug 3 absolvierten Weg, während der Begriff "Fahrspur" sich auf die fluchtende Anordnung von Raster-Elementen 1 bezieht, deren Kanten 6 Fahrschienen-Paare für die Bedienfahrzeuge 3 bilden.

Die Bedienfahrzeuge 3.1, 3.2 verfügen vorzugsweise über zwei Radsätze, um Fahrten sowohl in x- als auch in y-Richtung absolvieren zu können, wobei jeder Radsatz für Geradeausfahrten entlang einer der beiden Richtungen dient. Fahrten, welche nicht parallel zur x- oder y-Richtung erfolgen, sind somit nicht möglich. Die Bedienfahrzeuge 3 bewegen sich in der x-y-Ebene translatorisch, eine Rotation ist nicht möglich. Um die Fahrtrichtung zu ändern, halten die Bedienfahrzeuge 3.1, 3.2 an und wechseln den Radsatz, welcher Kontakt zu dem Fahrspur-Raster 15 hat. Anschliessend erfolgt eine Weiterfahrt orthogonal zu der vorherigen Fahrtrichtung. Das vorbeschriebene Anhalten muss hierbei so erfolgen, dass nach dem ebenfalls vorbeschriebenen Wechsel des Radsatzes dessen Räder auf denjenigen Kanten 6 - und somit Fahrschienen - zum Liegen kommen, welche eine Weiterfahrt orthogonal zur bisherigen Fahrtrichtung erlauben.

Um ein Bedienfahrzeug 3.1, 3.2 zu warten oder zu reparieren, benötigt eine (in den Figuren nicht dargestellte) Bedienperson Zugriff auf dieses Bedienfahrzeug 3.1, 3.2. Hierfür kann das Bedienfahrzeug 3.1, 3.2 entweder unmittelbar vor der Öffnung 4.1 anhalten, und eine in dem Wartungs- und Entnahme-Raum 9 befindliche Bedienperson kann, gegebenenfalls nach Öffnung der die Öffnung 4.1 reversibel verschliessenden beweglichen Barriere 8.2, falls vorhanden, Wartungs- und Reparatur-Arbeiten vornehmen.

Alternativ - und bevorzugt - kann das Bedienfahrzeug 3.1, 3.2 das Fahrspur-Raster 15 auch über die Öffnung 4.1 verlassen, um in den dahinter liegenden Wartungs- und Entnahme-Raum 9 zu gelangen, wo es gewartet und repariert werden kann.

In beiden Fällen sorgt die unbewegliche Barriere in Form der Wand 7, 7.1, 7.2, 7.3 dafür, dass ein fehlerbedingtes Einfahren eines Bedienfahrzeugs 3.1, 3.2 in den Wartungs- und Entnahme-Raum 9 oder auf die Öffnung 4.1, 4.2 zu jedenfalls dann nicht erfolgen kann, wenn dieses Bedienfahrzeug 3.2 bereits einen längeren geradlinigen Fahrweg 2.4, 2.5, 2.6 als Beschleunigungsstrecke genutzt hat.

In einer Anordnung gemäss Figur 10 sorgt die dort gezeigte Wand 7 dafür, dass ein fehlerhaft auf die Öffnung 4.1 zu fahrendes Bedienfahrzeug nicht mit hoher kinetische Energie auf die bewegliche Barriere 8.2 auffahren und diese womöglich überwinden kann. Diese Gefahr besteht bei einem sich fehlerhaft mit grosser Geschwindigkeit auf die Öffnung 4.1 zu bewegenden Bedienfahrzeug in einer Anordnung nach Figur 10, obwohl eine Einfahrt des Bedienfahrzeugs 3.2 auf die Wartungs-Plattform 10 im Normalbetrieb mangels Fahrschienen nicht vorgesehen ist.

Im Allgemeinen besteht eine solche Gefahr stets dann, wenn dem Bedienfahrzeug 3 ein längerer geradliniger Fahrweg 2.4, 2.5, 2.6 als Beschleunigungsstrecke zur Verfügung steht.

Das rechts in Figur 3 gezeigte Bedienfahrzeug 3.2 befindet sich am Ende eines solchen längeren geradlinigen Fahrwegs 2.4. Von seiner in Figur 3 gezeigten Position startend und in negativer y-Richtung auf die Öffnung 4.1 zu fahrend würde dieses Bedienfahrzeug 3.2 ohne Vorhandensein der Wand 7 kurz vor dem Aufprall auf die bewegliche Barriere 8.2 eine hohe kinetische Energie aufweisen, welche zu Sach- und Personenschäden führen könnte.

Beispielsweise könnte das Bedienfahrzeug 3.2 die bewegliche Barriere 8.2 überwinden und in den Wartungs- und Entnahmeraum 9 gelangen. Um dies zu verhindern, wird das Bedienfahrzeug 3.2 durch die Wand 7 abgebremst und vorzugsweise zum Stillstand gebracht.

Selbst mit einem langen "Anlauf", wie in Figur 3 gezeigt, würde ein fehlerbedingt auf die bewegliche Barriere 8.2 zu fahrendes Bedienfahrzeug 3.2 somit keine Lebensgefahr für eine im Wartungs- und Entnahmeraum 9 befindliche Bedienperson darstellen.

In Figur 2 ist der Fahrweg 11.1 beispielhaft dargestellt, welchen das weiter oben in Figur 2 dargestellte Bedienfahrzeug 3.2 absolvieren müsste, bevor es die Öffnung 4.1 passieren kann. Eine Geradeausfahrt in negativer y-Richtung ausgehend von der in Figur 2 dargestellten Position des Bedienfahrzeugs 3.2 bis zur Öffnung 4.1 ist wegen der Wand 7 auf dem Raster-Element 1.21 nicht möglich. Eine Geradeausfahrt, ohne eine Barriere überwinden zu müssen wäre nur für das links unten in Figur 2 dargestellte Bedienfahrzeug 3.2 möglich. Dieses müsste aber nach einer Fahrt in x-Richtung, d.h. in Figur 2 "nach oben", zwischen der Öffnung 4.1 und der Wand 7, d.h. auf den Raster-Elementen 1.19 und 1.20, zum Stillstand kommen, um anschliessend nach einem Wechsel des Radsatzes und somit der Fahrtrichtung in negativer y-Richtung in die Öffnung 4.1 einzufahren. Der vorgenannte Stillstand ist erforderlich, weil die Bedienfahrzeuge 3.1, 3.2 keine Kurven fahren können, sondern ihre Fahrtrichtung nur im Stillstand und nur um 90° ändern können. Auch das links unten gezeigte Bedienfahrzeug 3.2 kann somit mangels entsprechender auf die Öffnung 4.1 zu verlaufender Anlaufstrecke nicht mit hoher Geschwindigkeit auf diese Öffnung 4.1 zu fahren.

Der Pfeil 11.1 zeigt auch exemplarisch, dass sich Fahrweg 11.1 der Bedienfahrzeuge 3.1, 3.2 in geradlinige Abschnitte aufteilt, welche parallel oder orthogonal zueinander angeordnet sein, also jeweils parallel zur x- oder zur y-Richtung verlaufen. Diese geradlinigen Abschnitte werden im Rahmen der vorliegenden Erfindung als geradlinige Fahrwege 2 bezeichnet. Unmittelbar aneinander angrenzende geradlinige Fahrwege 2, welche einen Fahrweg eines Bedienfahrzeugs 3.2 bilden, sind orthogonal zueinander orientiert. Das Bedienfahrzeug in Figur 2 absolviert also entlang des Pfeils einen Fahrweg 11.1, welcher sich aus drei geradlinigen Fahrwegen 2 zusammensetzt. Bezogen auf diejenige Hälfte des Bedienfahrzeugs 3.2, welche sich in Figur 2 auf dem Raster-Element 1.22 befindet, verläuft der erste geradlinige Fahrweg von dem Raster-Element 1.22 zu dem Raster-Element 1.31. Der zweite geradlinige Fahrweg verläuft von den Raster-Element 1.31 zu dem Raster-Element 1.28. Der dritte geradlinige Fahrweg verläuft von dem Raster-Element 1.28 zu dem Raster-Element 1.19. Bezogen auf die "rechte" Hälfte des Bedienfahrzeugs 3.2, welche sich in Figur 2 auf dem Raster-Element 1.23 befindet, verläuft der erste geradlinige Fahrweg von dem Raster-Element 1.23 zu dem Raster-Element 1.32, der zweite von dem Raster-Element 1.32 zu dem Raster-Element 1.29 und der dritte von dem Raster-Element 1.29 zu dem Raster-Element 1.20.

Im Hinblick auf den Fahrweg 11.1 in Figur 2 sei ferner erwähnt, dass das Vorhandensein genau einer unbeweglichen Barriere, nämlich der Wand 7, gleichzeitig sowohl einen wirksamen und robusten (im Sinne von nicht fehleranfälligen) Schutz vor Verletzungen bietet, als auch Durchsatz und Effizienz des Blocklagersystems nur minimal herabsetzt. Die Wand 7 macht nämlich nur ein einziges Raster-Element, hier das Raster-Element 1.21, unbenutzbar. Dieses Raster-Element 1.21 steht also nicht für die Einlagerung von z.B. Behältern oder Kisten zur Verfügung, und muss von den Bedienfahrzeugen 3.2 umfahren werden. Einzig die Fahrspuren, welche parallel zur y-Richtung von dem Raster-Element 1.19 zu dem Raster-Element 1.27 und parallel zur x-Richtung von dem Raster-Element 1.3 zu dem Raster-Element 1.57 verlaufen, können von den Bedienfahrzeugen 3 nicht mehr vollständig als geradliniger Fahrweg 2 genutzt werden, sondern erfordern ein Umfahren der Wand 7 auf dem Raster-Element 1.21. Im Vergleich zu der hohen erreichbaren Schutzwirkung durch diese Wand sind die vorgenannten Einschränkungen eher geringfügig.

Die Wand 7 erlaubt den in Figur 3 gezeigten Bedienfahrzeugen 3.2 nur dann eine Einfahrt in den Wartungs- und Entnahmeraum 9, wenn diese zunächst von einer geeigneten Position startend in x-Richtung auf die Raster-Elemente 1.19 und 1.20 auffahren und dort zum Stehen kommen. Die vorgenannten Raster-Elemente 1.19 und 1.20 werden von den Barrieren 7, 7.1, 8.1, 8.2 begrenzt. Von dort kann das Bedienfahrzeug 3.2, falls nötig, in negativer y-Richtung in den Wartungs- und Entnahmeraum 9 einfahren. Da Richtungswechsel nur aus dem Stillstand möglich sind, bewirkt die Wand 7, dass jedes auf die bewegliche Barriere 8.2 zu oder in den Wartungs- und Entnahmeraum 9 einfahrende Bedienfahrzeug 3.2 eine sehr geringe kinetische Energie aufweist, da ihm keine Beschleunigungsstrecke zur Verfügung steht.

Die unbeweglichen Barrieren in Form der Wände 7.2, 7.3 in Figur 4 sind so angeordnet, dass keines der in Figur 4 dargestellten Bedienfahrzeuge 3.2 mit signifikantem "Anlauf" in negativer y-Richtung auf die Öffnung 4.1 zu fahren kann. Ferner sind die unbeweglichen Barrieren 7.2, 7.3 in Figur 4 so angeordnet, dass auch das links unten in Figur 4 dargestellte Bedienfahrzeug 3.2 nicht in positiver x-Richtung und mit "Anlauf" das unmittelbar vor der Öffnung 4.1 befindliche Raster-Element 1.19 passieren kann. Befindet sich eine Bedienperson zu Wartungszwecken auf dem weiteren Fahrspur-Raster 16, und besteht die Gefahr, dass diese Bedienperson beispielsweise einen Arm durch die Öffnung 4.1 hindurch in das erste Fahrspur-Raster 15 hineinstreckt, so dass dieser sich oberhalb des Raster-Elements 1.19 befindet, und von einem dieses Raster-Element 1.19 in positiver x-Richtung passierenden Bedienfahrzeug 3.2 verletzt werden könnte, so bieten die Wände 7.2, 7.3 einen entsprechenden Schutz. Wird das vorbeschriebene Hindurchstrecken beispielsweise eines Arms auf andere Weise verhindert, und ist ein schnelles Vorbeifahren eines Bedienfahrzeugs 3.2 über das Raster-Element 1.19 hinweg unproblematisch, so kann eine einzige Wand 7, die beispielsweise gemäss den Figuren 1 bis 3 auf dem Raster-Element 1.21 angeordnet ist, ausreichen.

Aus Figur 4 geht auch unmittelbar hervor, dass weder der geradlinige Fahrweg 2.4 noch der geradlinige Fahrweg 2.5 eine "Anlauf-Strecke" für ein Eindringen in das weitere Fahrspur-Raster 16 bietet. Entweder die unbewegliche Barriere 7.2 oder, im Falle des geradlinigen Fahrwegs 2.5, ein an das Raster-Element 1.28 angrenzender Abschnitt der äusseren Begrenzung 5, verhindert dies. Hierbei sei nochmals betont, dass nur geradlinige Fahrwege 2 als "Anlauf-Strecke" dienen können.

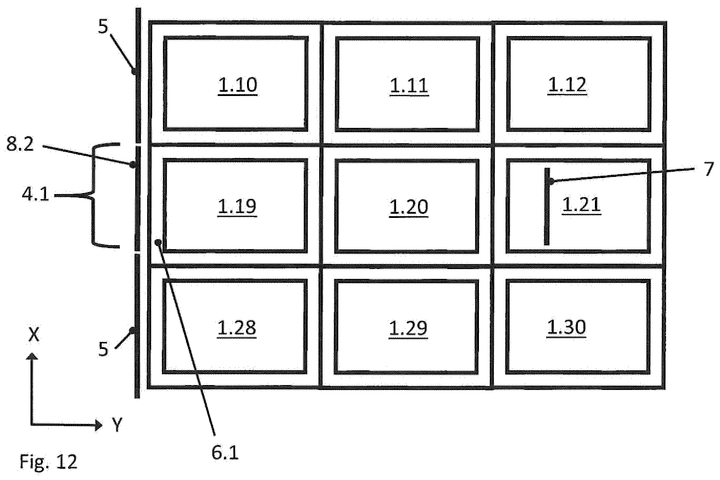

Aus den Figuren 5 bis 8 geht zweierlei hervor: Einerseits bestehen mehrere Möglichkeiten, die Fahrschienen-bildenden Kanten 6 anzuordnen. Von dieser Anordnung hängt wiederum ab, ob parallel zueinander fahrende Bedienfahrzeuge 3.2 einander unmittelbar passieren können, oder nicht. Andererseits bestehen mehrere Möglichkeiten, verschiedenartige unbewegliche Barrieren 7, 7.2, 13, 14 oder zumindest einen Teil-Abschnitt dieser Barrieren 7, 7.2, 13, 14 in verschiedener Weise auf derjenigen Fahrspur 12 anzuordnen, auf welcher ein Bedienfahrzeug 3.2 bei einer Geradeausfahrt die Öffnung 4.1 passieren würde. Diese Überlegungen gelten natürlich auch für den Fall, dass die Öffnung 4.1 und eine vorzugsweise vorhandene bewegliche Barriere 8.2 ähnlich derjenigen in Figur 12 nicht einem Bedienfahrzeug 3 die Durchfahrt erlauben soll, sondern kürzer ausgeführt ist, und lediglich einer Bedienperson Zutritt auf das Fahrspur-Raster 15 gewähren soll.

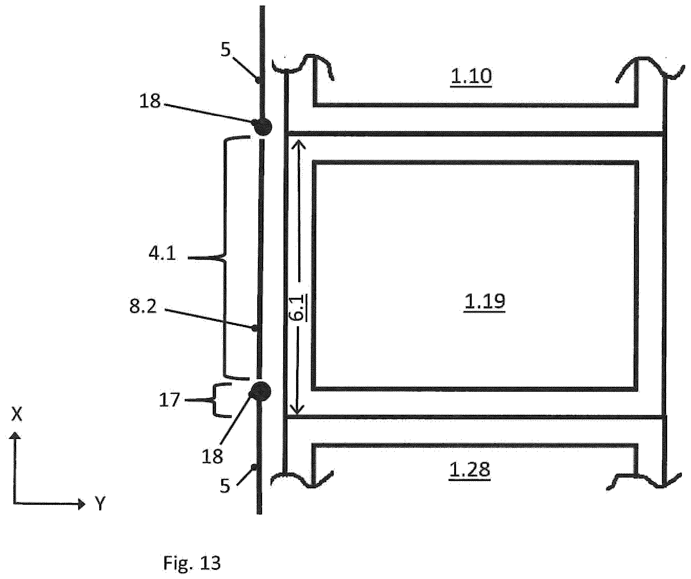

Die auf die Öffnung 4.1 zu verlaufende Fahrspur in der Anordnung nach Figur 12 umfasst die Raster-Elemente 1.19, 1.20, 1.21. Eine parallel zu der vorgenannten Öffnung 4.1 verlaufende Kante 6.1 des unmittelbar vor der Öffnung 4.1 angeordneten Raster-Elements 1.19 dieser Fahrspur verläuft über mehr als 90% ihrer Länge hinweg entlang der Öffnung 4.1. Aus diesem Grund wird die vorgenannte Fahrspur als "auf die Öffnung 4.1 zu verlaufend" bezeichnet. Dasselbe gilt für die Figur 13, welche einen vergrösserten Ausschnitt der Figur 12 mit zusätzlichen Details zeigt.

Vergleicht man die Figuren 6 und 7, so stehen in y-Richtung jeweils drei (nicht mit Bezugsziffern versehene) Fahrspuren 12 zur Verfügung.

Hierbei liegt in dem Blocklagersystem, welches ausschnittsweise in Figur 6 dargestellt ist, folgende Situation vor: Verkehrt ein (in Figur 6 nicht dargestelltes) Bedienfahrzeug 3.1, 3.2 von dem Raster-Element 1.10 startend in positiver y-Richtung auf der obersten Fahrspur, welche die Raster-Elemente 1.10 - 1.14 umfasst; und verkehrt ein weiteres Bedienfahrzeug 3.2 auf der mittleren Fahrspur 12, welche die Raster-Elemente 1.19 - 1.23 umfasst, von dem Raster-Element 1.23 startend in negativer y-Richtung, so können diese Bedienfahrzeuge 3.2 einander problemlos passieren. Die in Verlängerung der Kante 6.3 sich in y-Richtung erstreckende Fahrschiene gehört exklusiv zu der oberen Fahrspur und die in Verlängerung der Kante 6.4 sich parallel zur y-Richtung erstreckende Fahrschiene gehört exklusiv zu der mittleren Fahrspur. Die Kanten 6.4, 6.5 bilden einen Teil des Fahrschienen-Paars der mittleren Fahrspur. Ein auf dieser Fahrspur verkehrendes Bedienfahrzeug nutzt also die in Verlängerung der Kante 6.3 sich erstreckende Fahrschiene nicht.

Demgegenüber liegt in dem Blocklagersystem, welches ausschnittsweise in Figur 7 dargestellt ist, folgende Situation vor: Verkehren sowohl auf der oberen Fahrspur als auch auf der unmittelbar benachbarten mittleren Fahrspur jeweils ein (in Figur 7 nicht dargestelltes) Bedienfahrzeug 3.2 parallel zur y-Richtung, so können diese einander nicht passieren, da die obere und die mittlere Fahrspur sich diejenige Fahrschiene teilen, welche von der Kante 6.2 und den fluchtend sich parallel zur y-Richtung anschliessenden (nicht mit Bezugsziffern versehenen) Kanten 6 gebildet werden. Bei derartigen Fahrspur-Rastern sorgt eine übergeordnete Steuerung, beispielsweise ein Lager-Verwaltungs-System (LVS) dafür, dass die Bedienfahrzeuge 3.2 nicht parallel auf benachbarten Fahrspuren aneinander vorbeifahren.

Abhängig von einer Ausdehnung des (in den Figuren 5 bis 8 nicht gezeigten) Bedienfahrzeugs 3.2 entlang der y-Richtung und/oder beispielsweise abhängig von einer als gefährlich eingestuften maximalen kinetischen Energie und/oder abhängig von Erfahrungswerten, einer Modellierung oder Versuchen, kann eine unbewegliche Barriere 7, 7.2 13, 14 beispielsweise auf dem Raster-Element 1.21, dem Raster-Element 1.22 oder dem Raster-Element 1.23 angeordnet sein. In Figur 5 bilden lediglich die Raster-Elemente 1.19, 1.20 eine (nicht mit Bezugsziffern versehene) "Anlauf-Strecke" 3.2 für ein (nicht gezeigtes) Bedienfahrzeug 3.2. In den Figuren 6 und 7 umfasst diese "Anlauf-Strecke" zusätzlich das Raster-Element 1.21 bzw. die Raster-Elemente 1.21, 1.22.

Ferner geht aus den Figuren 5 bis 8 hervor, dass beispielsweise Wände 7, 7.2 ein Prellbock 13 oder ein Poller 14 als unbewegliche Barriere in Betracht kommt. Eine Wand 7 kann beispielsweise nur ein einziges Raster-Element 1.21 besetzen, wie in Figur 5 gezeigt. Eine beispielsweise L-förmige Wand 7.2 kann, wie in Figur 8 gezeigt, auch mehrere Raster-Elemente 1.10, 1.11, 1.12, 1.21 besetzen.

Aus Figur 3 geht hervor, dass ein Teil-Abschnitt der Wand 7.1 auf dem Fahrspur-Raster 15 auf einer parallel zu einer Längsrichtung der Öffnung 4.1 und unmittelbar benachbart zu der Öffnung 4.1 verlaufenden Fahrspur 12 in einem solchen Abstand von der Öffnung 4.1 auf einem Raster-Element 1.10 angeordnet ist, dass zwischen diesem Raster-Element 1.10 und einem unmittelbar an die Öffnung 4.1 angrenzenden Raster-Element 1.19 keine weiteren Raster-Elemente 1 liegen.

Aus den Figuren 4 und 8 geht hervor, dass ein Teil-Abschnitt von einem der orthogonal zueinander angeordneten Schenkel-förmigen Abschnitte der L-förmigen Wand 7.2 auf dem Fahrspur-Raster auf einer parallel zu einer Längsrichtung der Öffnung 4.1 und unmittelbar benachbart zu der Öffnung 4.1 verlaufenden Fahrspur in einem solchen Abstand von der Öffnung 4.1 auf dem Raster-Element 1.10 angeordnet ist, dass zwischen diesem Raster-Element 1.10 und dem unmittelbar an die Öffnung 4.1 angrenzenden Raster-Element 1.19 keine weiteren Raster-Elemente 1 liegen.

**Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen. Insbesondere kann an folgende Modifikationen gedacht sein:**
Obwohl dies in den Figuren nicht gezeigt wurde, kann stets daran gedacht sein, dass in der äusseren Begrenzung 5 mehrere Öffnungen 4 vorgesehen sind. Dementsprechend können auch mehrere unbewegliche Barrieren 7, 7.2, 13, 14 vorgesehen sein, um eine maximale Anlaufstrecke, welche auf diese Öffnungen 4 zu verläuft, zu begrenzen.

Zwischen der Öffnung 4.1, 4.2 und dem Raster-Element 1, welches die unbewegliche Barriere 7, 7.2, 13, 14 "trägt", liegen jeweils maximal vier Raster-Elemente, um die maximale Beschleunigungs-Strecke, entlang der das Bedienfahrzeug 3.1, 3.2 bei einer Fahrt auf die Öffnung 4.1, 4.2 zu seine Geschwindigkeit steigern kann, möglichst kurz zu halten.

Weiterhin sei allgemein angemerkt, dass nachstehend - und teilweise auch vorstehend - häufig verallgemeinernd beispielsweise auf das "Raster-Element 1" Bezug genommen wurde. Die Bezugnahme auf ein "Raster-Element 1" schliesst jeweils die konkret gezeigten Raster-Elemente (bspw. 1.2, 1.15, 1.63) mit ein. Dies gilt analog auch für einige andere Merkmale und Bezugsziffern (beispielsweise ein "Bedienfahrzeug 3" oder eine "Fahrspur 12").

Wird auf die "y-Richtung" oder die "x-Richtung" Bezug genommen, so kann die durch den jeweiligen Pfeil angedeutete Richtung oder die Gegenrichtung gemeint sein. Teilweise wird auch von einer "entgegengesetzten" x- oder y-Richtung gesprochen, um klarzustellen, dass die Richtung gemeint ist, welche entgegengesetzt zu dem in der jeweiligen Figur angegebenen Pfeil verläuft.

An den Wartungs- und Entnahme-Raum 9 kann sich in sämtlichen Ausführungsvarianten eine Wartungs-Plattform 10 anschliessen, welche jedoch nur in Figur 3 gezeigt ist.

Die Wartungs-Plattform 10 in der Ausführungsvariante nach Figur 10 umgibt keinen Wartungs- und Entnahme-Raum, sondern ermöglicht einer Bedienperson den Zutritt auf das Fahrspur-Raster 15 über die Öffnung 4.1. In sämtlichen gezeigten Ausführungsvarianten kann sich, beispielsweise alternativ zu dem Wartungs- und Entnahme-Raum 9, jeweils eine in Figur 10 dargestellte Wartungs-Plattform 10 anschliessen.

Jeder Öffnung 4.1, 4.2 in jedem der dargestellten Ausführungsbeispiele kann eine bewegliche Barriere 8.2 zugeordnet sein, welche die Öffnung 4.1, 4.2 reversibel verschliesst, wie es in den Figuren 3 sowie 10 bis 13 dargestellt ist.

Anstelle des in einigen Figuren gezeigten Wartungs- und Entnahme-Raums 9 sowie alternativ oder zusätzlich der Wartungs-Plattform 10 kann in sämtlichen gezeigten Ausführungsformen an das in Figur 4 gezeigte weitere Fahrspur-Raster 16 gedacht sein.

Anstelle zweier getrennter Fahrspur-Raster 15, 16 gemäss Figur 4 kann auch daran gedacht sein, ein grosses Fahrspur-Raster vorzusehen, welches durch eine Wand, die auf diesem Fahrspur-Raster verläuft und eine Öffnung 4 umfasst, in zwei Teile separiert ist.

Alle Varianten, in denen zwei in irgendeiner Form getrennte Fahrspur-Raster 15, 16 vorliegen, können vorteilhaft sein, wenn eine Bedienperson Wartungs- oder Reparatur-Arbeiten auf einem der Fahrspur-Raster 15, 16 durchführen muss. Dann kann nämlich die Öffnung 4.1, 4.2 durch eine bewegliche Barriere 8.2 reversibel verschlossen werden, und es muss nur dasjenige Fahrspur-Raster 15, 16 ausser Betrieb gesetzt werden, in welchem die Bedienperson Wartungs- oder Reparatur-Arbeiten durchführt. Die Gefahr eines fehlerhaft mit hoher Geschwindigkeit von dem gegenüberliegenden Fahrspur-Raster 15, 16 her kommend durch die Öffnung 4.1, 4.2 eindringenden Bedienfahrzeugs 3.2, welches die Bedienperson gefährden könnte, wird durch die Wand 7 minimiert.

Sämtliche Einrichtungen wie Öffnungen 4, unbewegliche Barrieren 7, 7.2, 13, 14 etc. können auch auf dem weiteren Fahrspur-Raster 16 vorhanden sein.

Zwei in irgendeiner Form getrennte Fahrspur-Raster 15, 16 können auch für eine Klima-Zonen-Trennung verwendet werden. Dies ist beispielsweise relevant, wenn in zumindest einem der Fahrspur-Raster 15, 16 gekühlte oder tiefgekühlte Produkte lagern. Es kann auch daran gedacht sein, dass die bewegliche Barriere 8.2, welche die Öffnung 4.1 zwischen zwei Fahrspur-Rastern 15, 16 reversibel verschliesst, eine Schleuse mit zumindest zwei Türen oder dergleichen ist, welche vorteilhaft in Verbindung mit einer Klima-Zonen-Trennung einsetzbar ist.

Die Öffnungen 4.1, 4.2 können optional von einer beweglichen Barriere 8.2, beispielsweise einer Tür, einem Rolltor, einer Schranke, einem versenkbaren Poller oder dergleichen reversibel verschlossen sein. Hierbei meint "verschlossen" entweder, dass eine Bedienperson nicht durch die betreffende Öffnung 4.1, 4.2 hindurchtreten kann, was bei einer Tür oder einem Rolltor der Fall sein kann. Meist verhindert eine Tür oder ein Rolltor auch die Durchfahrt eines Bedienfahrzeugs. Alternativ kann "verschlossen" auch heissen, dass ein versenkbarer Poller einem Bedienfahrzeug 3.1, 3.2 eine ungehinderte Einfahrt durch die betreffende Öffnung verwehrt.

Einzelheiten, welche im Hinblick auf die Öffnung 4.1 beschrieben wurden, gelten analog auf für die Öffnung 4.2.

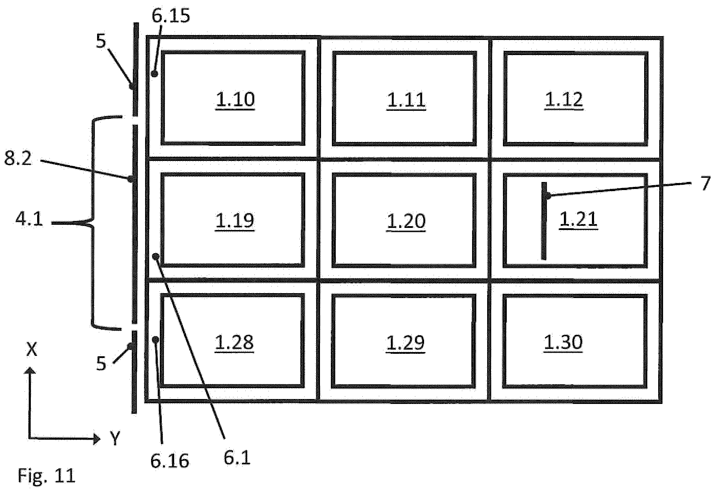

Einem Vergleich der Öffnung 4.2 gemäss Figur 9 mit den Öffnungen 4.1 gemäss den übrigen Figuren zeigt, dass die Öffnungen 4.1, 4.2 sich sowohl in y- als auch in x-Richtung erstrecken und in ihrer Länge variieren können. Die Länge der Öffnung 4.1 in den Figuren 1 bis 8 und 11 bis 12 wird in x-Richtung gemessen, die Länge der Öffnung 4.2 in Figur 9 in y-Richtung. Sollen die Öffnungen 4.1, 4.2 einem Bedienfahrzeug 3.1, 3.2 die Einfahrt erlauben, so sind die Abmessung der Öffnungen 4.1, 4.2 vorzugsweise an die Abmessungen der Bedienfahrzeuge 3.1, 3.2 angepasst. Auch ein Vergleich der Öffnungen 4.1 der Figuren 11 und 12 mit den Öffnungen 4.1 gemäss den Figuren 5 bis 8 zeigt, dass deren (hier in x-Richtung gemessene) Länge variieren kann.

Eine in y-Richtung gemessene Länge der Bedienfahrzeuge 3.2 ist grösser als ihre in x-Richtung gemessene Breite. Daher ist die parallel zur y-Richtung sich erstreckende Öffnung 4.2 in Figur 9 breiter, als die Öffnung 4.1 gemäss den Figuren 1 bis 4. Die in den Figuren 1 bis 4 gezeigte kleinere Öffnung 4.1, deren Ausdehnung in ihrer Längsrichtung, also in x-Richtung, der Länge einer kurzen Kante eines Raster-Elements 1 gleicht, genügt in den Ausführungsformen gemäss den Figuren 1 bis 4:
Die Bedienfahrzeuge 3.2 fahren entlang der negativen y-Richtung in die Öffnungen 4.1 ein.

Die in Figur 9 gezeigte Öffnung 4.2 erstreckt sich in ihrer Längsrichtung, also in y-Richtung, entlang zweier langer Kanten 6.7, 6.8 zweier Raster-Elemente 1.58, 1.59. Die Bedienfahrzeuge 3.2 fahren entlang der negativen x-Richtung und somit über ihre lange Seite in die Öffnung 4.2 ein, weshalb diese grösser sein muss, als die Öffnung 4.1.

Obwohl die in den Figuren gezeigten Ausführungsformen der vorliegenden Erfindung vorrangig unter Bezugnahme auf die länglichen und grösseren Bedienfahrzeuge 3.2 beschrieben wurden, so gelten sämtliche Überlegungen analog für die kürzeren Bedienfahrzeuge 3.1.

Diese kürzeren Bedienfahrzeuge 3.1 arbeiten vorzugsweise in der Art eines Portalkrans, um Ladegüter aus den Schächten aus- und in diese einzulagern: Zum Ein- und Auslagern kommen sie auf demjenigen Raster-Element 1 zum stehen, unter dem sich der Schacht mit den ein- oder auszulagernden Ladegütern befindet.

Die längeren Bedienfahrzeuge 3.2 arbeiten vorzugsweise in der Art eines Auslegerkrans: Zum Ein- und Auslagern kommen die Räder auf einem Raster-Element zum Stehen, wobei das ein- oder auszulagernde Ladegut sich in einem Schacht befindet, welcher sich unterhalb des in y-Richtung benachbarten Raster-Elements befindet.

Den kürzeren Bedienfahrzeugen 3.1 genügt für eine Durchfahrt eine Öffnung 4.1, 4.2, deren Ausdehnung jeweils der kurzen oder der langen Kante 6 eines Raster-Elements 1 entspricht.

In einer Ausführungsform ähnlich der in Figur 9 gezeigten, bei welcher die Öffnung 4.2 sich über mehr als eine Kante 6.7, 6.8 erstreckt, und bei welcher die Bedienfahrzeuge 3.2 die gesamte Breite der Öffnung 4.2 benötigen, um durch diese hindurchzufahren, kann eine Wand 7 oder im Allgemeinen eine unbewegliche Barriere alternativ auch auf nur einem der Raster-Elemente 1.49, 1.50 platziert werden. Da das oben in Figur 9 dargestellte Bedienfahrzeug 3.2 sich, wie bereits mehrfach erwähnt, nur translatorisch aber nicht rotatorisch auf dem Fahrspur-Raster bewegen kann, kann eine beispielsweise nur auf dem Raster-Element 1.49 angeordnete Wand 7 genügen, um ein Einfahren in die Öffnung 4.2 "mit Anlauf", d.h. in negativer x-Richtung zu verhindern. Bevorzugt ist jedoch eine Wand 7, welche auf beiden Raster-Elementen 1.49, 1.50 angeordnet ist, wie in Figur 9 gezeigt.

Werden anstelle der Bedienfahrzeuge 3.2 die Bedienfahrzeuge 3.1 eingesetzt, welche kürzer gebaut sind, so kann daran gedacht sein, die Wand 7 der Figuren 1 bis 3 auf dem Raster-Element 1.20 anzuordnen. Oftmals werden die Bedienfahrzeuge 3.1, 3.2 in Länge (und Breite) Ausdehnungen aufweisen, welche im Wesentlichen einem geradzahligen Vielfachen der Länge (und Breite) der Raster-Elemente 1 entsprechen. Demnach kann daran gedacht sein, die Wand 7 auf einem Raster-Element 1 anzuordnen, so dass zwischen diesem Raster-Element 1 und der Öffnung 4.1 in y-Richtung gemessen ein oder zwei oder drei oder vier weitere Raster-Elemente 1 liegen. Für einen in x-Richtung gemessenen Abstand zwischen der in Figur 9 gezeigten Wand 7 und der Öffnung 4.2 gelten analoge Überlegungen.

Im Allgemeinen ist für die Platzierung der unbeweglichen Barriere 7, 7.2, 13, 14 die maximale Beschleunigungsstrecke massgeblich. Der Abstand zwischen der vorgenannten Barriere 7, 7.2, 13, 14 und der Öffnung 4.1, 4.2 ist vorzugsweise so gewählt, dass die maximale erreichbare kinetische Energie des Bedienfahrzeugs 3 nicht ausreicht, um die bewegliche Barriere 8.2 im geschlossenen Zustand zu überwinden. Dies wird erreicht, indem zwischen dem "Barriere-tragenden" Raster-Element 1 und der Öffnung 4.1, 4.2 maximal vier Raster-Elemente 1 liegen.

Wären die Bedienfahrzeuge 3.2 in y-Richtung nicht so lang wie zwei Raster-Elemente 1, sondern beispielsweise 2,5-mal so lang wie ein Raster-Element 1, so wäre die Wand 7 in den Figuren 1 bis 3 vorzugsweise auf dem Raster-Element 1.22 platziert, so dass drei Raster-Elemente 1.19, 1.20, 1.21 zwischen der Wand 7 und der Öffnung 4.1 liegen. Eine Anordnung der Wand 7 auf dem Raster-Element 1.23 wäre ebenso möglich, so dass zwischen der Wand 7 bzw. zwischen einem Barriere-tragenden Raster-Element 1.23 und der Öffnung 4.1 vier Raster-Elemente 1.19, 1.20, 1.21, 1.22 liegen.

Die (in den Figuren nicht dargestellten) Schächte erstrecken sich vorzugsweise in der (ebenfalls nicht dargestellten) z-Richtung, also orthogonal zur x-y-Ebene. In diesen Schächten sind üblicherweise Behälter gestapelt. Dieser Aufbau ist von Blocklagersystemen aus dem Stand der Technik bekannt.

Als bewegliche Barriere 8.1, 8.2 kommen Türen, Tore, Schnelllauftore, Schranken, etc. in Betracht. Die beweglichen Barrieren 8.1, 8.2 in Figur 3 können mechanisch oder elektronisch miteinander gekoppelt sein, so dass sie sich stets abhängig voneinander bewegen, und eine Schleuse für das Bedienfahrzeug 3.1, 3.2 bilden.

Als unbewegliche Barriere kommen in sämtlichen gezeigten Ausführungsformen jeweils ein oder mehrere Poller 14, Prellböcke 13, Wände 7, 7.1 7.2 (bspw. Wand-Abschnitte), Fangnetz-Konstruktionen (nicht gezeigt) etc. in Betracht. So kann beispielsweise die Wand 7 in Figur 1 durch einen Poller 14 oder einen Prellbock 13 auf dem Raster-Element 1.21 ersetzt werden. Die L-förmige Wand 7.2 in Figur 4 kann durch beispielsweise vier Poller 14 oder vier Prellböcke 13 auf den Raster-Elementen 1.10, 1.11, 1.12, 1.21 ersetzt werden. Sowohl die L-förmige Wand 7.2 als auch beispielsweise vier sie ersetzende Poller 14 oder Prellböcke 13 können neben der verringerten "Anlauf-Strecke" den Vorteil bieten, dass ein auf den Raster-Elementen 1.19, 1.20 unmittelbar vor der Öffnung 4.1 befindliches Bedienfahrzeug 3.2 nicht durch ein weiteres Bedienfahrzeug 3.2, welches sich in x-Richtung nähert, fehlerbedingt gerammt und anschliessend in x-Richtung von den Raster-Elementen 1.19, 1.20 verdrängt werden kann. Sowohl die L-förmige Wand 7.2 als auch beispielsweise vier sie ersetzende Poller 14 oder Prellböcke 13 können weiterhin den Vorteil bieten, dass die Bedienfahrzeuge 3.2 nur in positiver x-Richtung, in den Figuren 4 und 8 also "von unten nach oben" auf die Raster-Elemente 1.19, 1.20 auffahren können. Dieser Umstand kann eine Überwachung der Position des Bedienfahrzeugs 3.2 mittels entsprechender Sensoren vereinfachen, da nur eine Fahrtrichtung für das Auffahren auf die vorgenannten Raster-Elemente 1.19, 1.20 berücksichtigt werden muss. Diese Überwachung der Position kann auch zum Einsatz kommen, wenn die Öffnung 4.1 durch eine bewegliche Barriere 8 (in den Figuren 4 und 8 nicht gezeigt) verschlossen ist, wobei diese bewegliche Barriere 8 in Abhängigkeit von der Position des Bedienfahrzeugs 3.2 angesteuert wird.

Ein Vorteil, den insbesondere die L-förmige Wand 7.2 oder eine in derselben Weise L-förmig geformte oder anderweitig gewinkelte einstückige Barriere bieten kann, ist die im Vergleich zu einzelnen Barrieren höhere Stabilität.

Als Wartungs-Plattform 10 kommt beispielsweise eine Bühne in Betracht. Eine Bedienperson kann sich auf der Wartungs-Plattform 10 oder im Wartungs- und Entnahmeraum 9 aufhalten, um ein Bedienfahrzeug 3.1, 3.2 zu warten oder zu reparieren. Hält sich die Bedienperson im Wartungs- und Entnahme-Raum 9 auf, so wird sich ein zu wartendes oder zu reparierendes Bedienfahrzeug 3.1, 3.2 zweckmässigerweise zwischen der Wand 7 und der Öffnung 4.1, 4.2, also auf dem Fahrspur-Raster 15, befinden. Fährt das Bedienfahrzeug 3.1, 3.2 in den Wartungs- und Entnahme-Raum 9 ein, so wird sich die Bedienperson zweckmässigerweise auf der Wartungs-Plattform 10 aufhalten. Wie in Figur 10 gezeigt, kann eine solche Wartungs-Plattform 10 auch einzig dazu dienen, einer Bedienperson Zutritt auf das Fahrspur-Raster 15 zu verschaffen.

In den Figuren 1 bis 3 ist die - nur schematisch angedeutete - Wand 7 in x-Richtung genauso lang wie die Öffnung 4.1. Es kann auch daran gedacht sein, dass die Ausdehnung der Öffnung 4.1 in x-Richtung grösser ist, als in den Figuren gezeigt. Die in x-Richtung gemessene Ausdehnung der Wand 7 kann dann zweckmässigerweise auch grösser gewählt werden. Allgemein kann daran gedacht sein, die Wand 7 so lang zu wählen, dass sie sämtliche geradlinige Fahrten mit langem "Anlauf" in negativer y-Richtung auf die Öffnung 4.1 zu verhindert. Dies gilt auch, wenn wegen entsprechender Breite der Öffnung 4.1 solche Fahrten auf zwei parallel in y-Richtung verlaufenden Fahrwegen möglich wären. Für die Öffnung 4.2 gelten analoge Überlegungen für eine Fahrt bzw. einen "Anlauf" parallel zur x-Richtung. Weitere diesbezügliche Überlegungen wurden bereits mit Hinblick insbesondere auf die Figuren 11 und 12 geschildert.

In sämtlichen Ausführungsvarianten kann daran gedacht sein, eine maximale horizontale Belastbarkeit der Wand 7 an die maximal zu erwartende Kraft anzupassen, welche ein Bedienfahrzeug 3.1, 3.2 auf die Wand 7 übertragen kann. Hierbei kann auch ein nicht vollständig geradliniger Aufprall des Bedienfahrzeugs 3.1, 3.2 auf die Wand 7 mitgedacht sein, welcher fehlerbedingt oder auf Grund des Aufbaus von Blocklagersystem und/oder Bedienfahrzeug 3.1, 3.2 oder wegen eines Verkantens oder dergleichen und anschliessendem "Schrägstand" in Bezug auf das Fahrspur-Raster 15 auftreten kann. Eine maximale horizontale Belastbarkeit bezieht sich hierbei auf eine Belastung, deren Wirkrichtung sich innerhalb der x-y-Ebene erstreckt oder zumindest eine insofern signifikante Kraft-Komponente innerhalb der x-y-Ebene aufweist, dass sie hinsichtlich der Stabilität der Wand 7 beachtlich ist.

Analoge Überlegungen hinsichtlich der maximalen Belastbarkeit gelten für die anderen unbeweglichen Barrieren 7.1, 7.2, 13, 14.

Eine beispielhafte Schleuse können die beweglichen Barrieren 8.1, 8.2 in Figur 3 bilden. Beispielsweise könnte das Blocklagersystem so gestaltet und gesteuert sein, dass ein Bedienfahrzeug 3.2 erst nach Öffnung der beweglichen Barriere 8.1 auf die Raster-Elemente 1.19, 1.20 zwischen den Wänden 7, 7.1 und der beweglichen Barriere 8.2 auffahren kann. Hierbei kann daran gedacht sein, dass die die Öffnung 4.1 reversibel verschliessende bewegliche Barriere 8.2 geschlossen ist, wenn die andere bewegliche Barriere 8.1 geöffnet ist, und zwar entweder immer oder zumindest solange noch kein Bedienfahrzeug 3.2 in die vorgenannten Raster-Elemente 1 eingefahren ist. Es kann jedoch an zahlreiche Alternativen gedacht sein, um eine Schleuse auszubilden. Die beweglichen Barrieren 8.1, 8.2 können mechanisch und/oder steuerungs-technisch miteinander gekoppelt sein. Ferner kann angedacht sein, beide beweglichen Barrieren 8.1, 8.2 durch eine übergeordnete bewegliche Barriere zu ersetzen, welche beispielsweise als Schnelllauftor oder dergleichen ausgebildet ist, und jeweils nur entweder die Einfahrt in die Raster-Elemente 1 zwischen den Wänden 7, 7.1 und der beweglichen Barriere 8.2 vom Fahrspur-Raster kommend freigegeben wird, oder die Einfahrt in den Wartungs- und Entnahme-Raum 9.

Auf die äussere Begrenzung 5 kann verzichtet werden, falls sie nicht benötigt wird. Dies kann insbesondere dann der Fall sein, wenn ein anderweitiger Runterfallschutz für die Bedienfahrzeuge 3.1, 3.2 gegeben ist.

Jede Öffnung 4.1, 4.2 kann eine Öffnung für eine Bedienperson sein, und der Bedienperson beispielsweise Zutritt zu dem Fahrspur-Raster 15 gewähren. Zusätzlich oder alternativ kann jede Öffnung 4.1, 4.2 eine Öffnung für die Bedienfahrzeuge 3.1, 3.2 sein, und diesen die Durchfahrt in einen hinter der Öffnung 4.1, 4.2 liegenden Wartungs- und Entnahme-Raum 9 oder auf ein weiteres Fahrspur-Raster 16 erlauben.

Wie in den Figuren gezeigt, grenzen die Raster-Elemente 1 vorzugsweise "Kante an Kante" aneinander. Es kann jedoch auch an Fahrspur-Raster 15 gedacht sein, bei welchen zwischen den Kanten benachbarter Raster-Elemente 1 ein Zwischenraum vorliegt.

Die Fahrspur-Raster 15, 16 können deutlich mehr Fahrspuren 12 und Raster-Elemente 1 aufweisen, als in den Figuren gezeigt. Auch Fahrspur-Raster 15, 16 mit weniger Fahrspuren 12 und Raster-Elementen 1 sind denkbar. Vorzugsweise ist jedoch stets daran gedacht, dass das Fahrspur-Raster 15 Raster-Elemente 1 umfasst, welche orthogonal und parallel zueinander verlaufende Fahrspuren 12 ausbilden. Das heisst, jede Fahrspur 12 ist entweder parallel oder orthogonal zu jeder beliebigen anderen Fahrspur 12 des Fahrspur-Rasters 15 angeordnet. Vorzugsweise sind die parallelen Fahrspuren 12 unmittelbar zueinander benachbart angeordnet. Sind zwei beliebige Fahrspuren 12 orthogonal zueinander angeordnet, so kreuzen diese sich vorzugsweise.

Im Hinblick auf sämtliche Figuren sei erwähnt, dass diese nicht massstabsgetreu dargestellt sind.

Die in x-Richtung verlaufenden Kanten 6, 6.1 der Raster-Elemente 1 können eine Länge von ungefähr 500 mm aufweisen. Abweichungen von dieser - als reine Grössenordnung zu verstehenden - Angabe sind durchaus möglich. Überlappen die Kante 6.1 und die Öffnung 4.1 über 90% ihrer Länge, also in einer Anordnung ähnlich derjenigen nach Figur 12, stünde demnach ein (nur in Figur 13 dargestellter) in x-Richtung verlaufender Teilabschnitt 17 der äusseren Begrenzung 5 für eine Kollision mit einem fehlerhaft auf die Öffnung 4.1 zu fahrenden Bedienfahrzeug 3.2 zur Verfügung, der ungefähr 50 mm lang ist. Bei den oftmals geringen Toleranzen und der somit passgenauen Fertigung und Betriebs- und Fahrweise eines automatisierten Blocklager-Systems kann eine solch kleine Aufprall-Fläche genügen, um die kinetische Energie im Fall des Aufpralls so stark herabzusetzen, dass eine hinter der Öffnung 4.1 oder hinter der beweglichen Barriere 8.2 befindliche Bedienperson geschützt ist. Je nach Bauweise der äusseren Begrenzung 5 befindet sich unmittelbar angrenzend an die Öffnung 4.1 bzw. die bewegliche Barriere 8.2 jeweils ein (nur in Figur 13 dargestellter) stabiler Pfosten, welcher beispielsweise ein die äussere Begrenzung 5 teilweise bildendes Gitter (nicht dargestellt) hält und geeignet ist, die kinetische Energie des Bedienfahrzeugs 3 beim Aufprall stark herabzusetzen.

In Bezug auf das konkret in Figur 13 gezeigte Ausführungsbeispiel sind also die Öffnung 4.1 und die bewegliche Barriere 8.2 in x-Richtung gemessen kürzer, als die Kante 6.1 des Raster-Elements 1.19. Ein das Raster-Element 1.19 (in Figur 13 "nach links") passierendes (in Figur 13 nicht dargestelltes) Bedienfahrzeug würde mit dem unten in Figur 13 dargestellten Pfosten 18, an welchem der unten dargestellte Abschnitt der äusseren Begrenzung 5 befestigt ist, kollidieren. Die in x-Richtung gemessene Breite des (nicht gezeigten) Bedienfahrzeugs entspricht nämlich im Wesentlichen der in x-Richtung gemessenen Länge der Kante 6.1, weshalb das Bedienfahrzeug nicht durch die Öffnung 4.1 passt. Der Teilabschnitt 17 der äusseren Begrenzung 5 sowie der endständig an diesem Teilabschnitt 17 befestigte Pfosten 18 nehmen zumindest einen signifikanten Anteil der kinetischen Energie des fehlerhaft auf die Öffnung 4.1 fahrenden Bedienfahrzeugs beim Aufprall auf, um eine hinter der beweglichen Barriere 8.2 befindliche Bedienperson (nicht gezeigt) zu schützen.

Eine Ausdehnung des Wartungs- oder Entnahme-Raums 9 in y-Richtung kann grösser sein, als in den Figuren gezeigt. Beispielsweise kann zumindest ein Bedienfahrzeug 3.2 oder eine Bedienperson und ein Bedienfahrzeug 3.2 im Wartungs- oder Entnahme-Raum 9 Platz finden. Eine in x-Richtung gemessene Ausdehnung des Wartungs- und Entnahme-Raums 9 kann auch grösser sein, als die -Öffnung 4. Vorzugsweise verfügt der Wartungs- und Entnahme-Raum 9 jedoch unabhängig von seiner Ausdehnung, die in den Figuren 1 bis 4 der Einfachheit und Übersicht halber derjenigen eines Raster-Elements 1 entspricht, über Fahrschienen-bildende Kanten 6.17, 6.18. Diese sind vorzugsweise fluchtend mit den Kanten 6 des unmittelbar vor der Öffnung 4.1 gelegenen Raster-Elements 1.19 und somit auch fluchtend mit den übrigen Raster-Elementen 1 der auf die Öffnung 4.1 zu verlaufenden Fahrspur 12 angeordnet, um dem Bedienfahrzeug 3 die Einfahrt in den Wartungs- und Entnahme-Raum 9 zu erlauben.

Ferner kann auch eine Ausdehnung des Fahrspur-Rasters 15 in sämtlichen gezeigten Ausführungsbeispielen sowie des Fahrspur-Rasters 16 in Figur 4 deutlich grösser sein, als dies in den Figuren gezeigt wurde. Das Fahrspur-Raster 16 wurde der Übersicht halber lediglich sehr klein dargestellt, es kann zumindest gleich gross sein wie das Fahrspur-Raster 15.

Weiterhin sind die Kanten 6 der Raster-Elemente 1, welche das Fahrspur-Raster 15 bilden, in den Figuren 1 bis 4 und 9 bis 10 sehr dünn dargestellt. Die Kanten 6.2, 6.3, 6.4, usw. sind natürlich vorzugsweise stets so breit ausgeführt, wie es in den Figuren 5 bis 8 und 11 bis 13 dargestellt ist.

Den Figuren 3 und 4 sind weitere unbewegliche Barrieren 7.1, 7.2, 7.3 zu entnehmen, welche zumindest abschnittsweise in x-Richtung oberhalb bzw. unterhalb des unmittelbar an die Öffnung 4.1 angrenzenden Raster-Elements 1.19 angeordnet sind. Ein Teil-Abschnitt der weiteren unbeweglichen Barriere 7.1 Liegt auf dem Raster-Element 1.10, ein Teil-Abschnitt der weiteren unbeweglichen Barriere 7.3 liegt auf dem Raster-Element 1.37. Beide vorgenannten Teil-Abschnitte liegen also auf einer parallel zu einer Längsrichtung der Öffnung 4.1 und unmittelbar benachbart zu dieser verlaufenden Fahrspur, welche unter anderem durch die Raster-Elemente 1.1, 1.10, 1.19, 1.28, 1.37 umfasst. Zwischen dem Raster-Element 1.37, auf dem ein Teil-Abschnitt der weiteren unbeweglichen Barriere 7.3 liegt, und dem unmittelbar an die Öffnung 4.1 angrenzenden Raster-Element 1.19 liegt nur ein Raster-Element 1.28. Zwischen dem Raster-Element 1.10, auf dem ein Teil-Abschnitt der weiteren unbeweglichen Barriere 7.1 liegt, und dem unmittelbar an die Öffnung 4.1 angrenzenden Raster-Element 1.19 liegt kein Raster-Element 1. Analoges gilt für den Teil-Abschnitt der unbeweglichen Barriere 7.2, welcher auf dem Raster-Element 1.10 liegt. Im Allgemeinen kann daran gedacht sein, dass der vorstehend beschriebene Abstand maximal vier Raster-Elemente 1 beträgt. Auf diese Weise wird verhindert, dass ein Bedienfahrzeug 3.1, 3.2 unmittelbar an der Öffnung 4.1 mit grosser Geschwindigkeit in x-Richtung vorbeifährt.

Die weiteren unbeweglichen Barrieren 7.1, 7.3 der Figuren 3 und 4 können hierbei miteinander kombiniert werden. Es kann also beispielsweise daran gedacht sein, die parallel zur x-Richtung verlaufende Wand 7 gemäss Figur 3 mit der in Figur 3 gezeigten weiteren unbeweglichen Barriere 7.1 sowie der in Figur 4 gezeigten weiteren unbeweglichen Barriere 7.3 zu kombinieren. Derartige Kombinationen sind stets möglich, sofern die Bedienfahrzeuge 3.2 noch in die Öffnung 4.1 einfahren können, was in Figur 4 beispielsweise über den geradlinigen Fahrweg 2.5 und eine anschliessende Fahrt entlang der x-Richtung auf die Raster-Elemente 1.19, 1.20 möglich ist.

In sämtlichen Ausführungsformen kann daran gedacht sein, mehrere Öffnungen 4.1, 4.2 vorzusehen.

In Bezug auf die Figuren 1 bis 3 sei angemerkt, dass die Wand 7 eher "rechts" (vgl. Fig. 1), "mittig" (vgl. Fig. 2) oder "links" (vgl. Fig.3) auf dem Raster-Element 1.21 angeordnet sein kann. In allen drei Fällen ist das Raster-Element 1.21 von der Wand "belegt", welche also die gewünschte Barriere-Funktion ausübt, so dass jeweils als "Anlauf-Strecke" nur die Raster-Elemente 1.19, 1.20 verbleiben.

Im Allgemeinen ist anzumerken, dass Ausdehnung, Grösse und Lage der Wand 7, des Prellbocks 13 und des Pollers 14 jeweils hinsichtlich der gewünschten Stabilität oder hinsichtlich anderer Anforderungen ausgewählt und angepasst werden kann. Vorzugsweise sind Ausdehnung, Grösse und Lager hierbei so gewählt, dass nur ein Raster-Element 1 von der jeweiligen Barriere 7, 13, 14 "belegt" wird. Dies gilt nicht für Barrieren wie die Wände 7.1, 7.2, 7.3 in den Figuren 3 und 4, welche sich absichtlich über mehrere Raster-Elemente 1 erstrecken.

Die bewegliche Barriere 8.2 in den Ausführungsformen gemäss den Figuren 10, 11 und 12 ist bevorzugt, aber nicht zwingend vorhanden.

Ausgehend von der Ausführungsform nach Figur 4 könnte daran gedacht sein, einen Teilabschnitt der Wand 7.2 auf dem Raster-Element 1.30 anzuordnen. Auf diese Weise wäre auch eine Fahrt entlang des gesamten Fahrwegs 2.5 verhindert, so dass ein Bedienfahrzeug 3.2 nicht mit hoher Geschwindigkeit auf denjenigen Abschnitt der äusseren Begrenzung 5 auffahren kann, welcher unmittelbar an die Öffnung 4.1 angrenzt. Dies gilt analog auch für alle anderen gezeigten Ausführungsformen. Im Allgemeinen kann angedacht sein, dass zumindest ein Teilabschnitt einer Wand 7, 7.2 oder im Allgemeinen einer unbeweglichen Barriere auch zumindest auf denjenigen Fahrspuren angeordnet ist, welche parallel und unmittelbar neben der auf die Öffnung 4.1 zu verlaufenden Fahrspur verlaufen. Diese parallel und unmittelbar benachbart verlaufende Fahrspur ist in Figur 4 die Fahrspur, auf welcher der Fahrweg 2.5 verläuft.

### Bezugszeichenliste

| | |
|---|---|
| 1 | Raster-Element |
| 2 | Geradliniger Fahrweg |
| 3 | Bedienfahrzeug |
| 4 | Öffnung |
| 5 | äussere Begrenzung |
| 6 | Kante |
| 7 | unbewegliche Barriere in Form einer Wand |
| 8 | bewegliche Barriere |
| 9 | Wartungs- oder Entnahme-Raum |
| 10 | Wartungs-Plattform |
| 11 | Fahrweg |
| 12 | Fahrspur |
| 13 | unbewegliche Barriere in Form eines Prellbocks |
| 14 | unbewegliche Barriere in Form eines Pollers |
| 15 | Fahrspur-Raster |
| 16 | Weiteres Fahrspur-Raster |
| 17 | Teilabschnitt der äusseren Begrenzung |
| 18 | Pfosten |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Automatisiertes Blocklagersystem,
das Blocklagersystem umfassend einen Regalbau mit Schächten zur Blocklagerung von Ladeeinheiten in vertikalen Stapeln,
wobei die Schächte eine rechteckige Grundfläche aufweisen und in einer Draufsicht rasterförmig angeordnet sind,
das Blocklagersystem umfassend ferner ein an dem Raster der Schächte ausgerichtetes Fahrspur-Raster (15), welches rechteckige Raster-Elemente (1) umfasst, die orthogonal und parallel zueinander verlaufende Fahrspuren (12) ausbilden,
wobei das Fahrspur-Raster (15) oberhalb der Schächte angeordnet ist,
das Blocklagersystem umfassend weiterhin zumindest ein automatisches Bedienfahrzeug (3), welches eingerichtet ist, auf dem Fahrspur-Raster (15) entlang der orthogonal und parallel zueinander verlaufenden Fahrspuren (12) zu verkehren,
das Blocklagersystem umfassend weiterhin eine Öffnung (4.1, 4.2) für eine Bedienperson und/oder für das Bedienfahrzeug (3),
**gekennzeichnet durch**
eine unbewegliche Barriere (7, 7.2, 13, 14), wobei zumindest ein Teil-Abschnitt dieser Barriere (7, 7.2, 13, 14) auf dem Fahrspur-Raster (15) auf einer auf die Öffnung (4.1, 4.2) zu verlaufenden Fahrspur (12) in einem solchen Abstand von der Öffnung (4.1, 4.2) auf einem Raster-Element (1) angeordnet ist, dass zwischen diesem Raster-Element (1) und der Öffnung (4.1, 4.2) maximal vier Raster-Elemente (1) liegen.

2. Automatisiertes Blocklagersystem nach Anspruch 1, **dadurch gekennzeichnet, dass** zumindest ein Teil-Abschnitt von zumindest einer unbeweglichen Barriere (7, 7.2, 13, 14) auf dem Fahrspur-Raster (15) auf jeder auf die Öffnung (4.1, 4.2) verlaufenden Fahrspur (12) angeordnet ist.

3. Automatisiertes Blocklagersystem nach einem der vorhergehenden Ansprüche, wobei eine Fahrspur (12) dann als auf die Öffnung (4.1, 4.2) zu verlaufend betrachtet wird, wenn eine parallel zu dieser Öffnung (4.1, 4.2) verlaufende Kante (6.1) des unmittelbar vor der Öffnung (4.1, 4.2) angeordneten Raster-Elements (1) dieser Fahrspur (12) über zumindest 90% ihrer Länge hinweg entlang der Öffnung (4.1, 4.2) verläuft.

4. Automatisiertes Blocklagersystem nach einem der vorangehenden Ansprüche, **dadurch gekennzeichnet, dass** die unbewegliche Barriere (7) ausgewählt ist aus der Gruppe umfassend eine Wand (7), einen Pfosten, einen Poller (14), einen Prellbock (13), eine Fangnetz-Konstruktion.

5. Automatisiertes Blocklagersystem nach einem der vorangehenden Ansprüche, **gekennzeichnet durch** eine bewegliche Barriere (8, 8.1, 8.2).

6. Automatisiertes Blocklagersystem nach Anspruch 3, **gekennzeichnet durch** eine Schleuse, welche von zumindest einer unbeweglichen Barriere (7, 7.1, 7.2) und zumindest einer beweglichen Barriere (8, 8.1, 8.2) gebildet wird.

7. Automatisiertes Blocklagersystem nach zumindest einem der vorangehenden Ansprüche, **gekennzeichnet durch** eine das Fahrspur-Raster (15) umgebende äussere Begrenzung (5), welche abschnittsweise im Wesentlichen parallel zu zumindest einer Fahrspur (12) verläuft.

8. Automatisiertes Blocklagersystem nach zumindest einem der vorangehenden Ansprüche, **gekennzeichnet durch** eine weitere unbewegliche Barriere (7.1), wobei zumindest ein Teil-Abschnitt dieser weiteren unbeweglichen Barriere (7.1) auf dem Fahrspur-Raster auf einer parallel zu einer Längsrichtung der Öffnung (4.1, 4.2) und unmittelbar benachbart zu der Öffnung (4.1, 4.2) verlaufenden Fahrspur (12) in einem solchen Abstand von der Öffnung (4.1, 4.2) auf einem Raster-Element (1) angeordnet ist, dass zwischen diesem Raster-Element (1) und einem unmittelbar an die Öffnung (4.1, 4.2) angrenzenden Raster-Element (1) maximal vier Raster-Elemente (1) liegen.

9. Automatisiertes Blocklagersystem nach zumindest einem der Ansprüche 1 bis 7, **gekennzeichnet durch** eine im Wesentlichen einstückige unbewegliche Barriere (7.2), mit zumindest zwei Abschnitten, wobei zumindest ein Teil-Abschnitt von jedem dieser Abschnitte auf dem Fahrspur-Raster auf einer parallel zu einer Längsrichtung der Öffnung (4.1, 4.2) und unmittelbar benachbart zu der Öffnung (4.1, 4.2) verlaufenden Fahrspur (12) in einem solchen Abstand von der Öffnung (4.1, 4.2) auf einem Raster-Element (1) angeordnet ist, dass zwischen diesem Raster-Element (1) und einem unmittelbar an die Öffnung (4.1, 4.2) angrenzenden Raster-Element (1) maximal vier Raster-Elemente (1) liegen.

10. Verfahren zum Betreiben eines Blocklagersystems gemäss zumindest einem der Ansprüche 1 bis 7, **dadurch gekennzeichnet, dass** zumindest ein Bedienfahrzeug (3.1, 3.2) auf dem Fahrspur-Raster (15) verkehrt.

11. Verfahren nach Anspruch 10, **dadurch gekennzeichnet, dass** ein Wechsel eines Bedienfahrzeugs (3.1, 3.2) von dem Fahrspur-Raster (15) auf ein weiteres Fahrspur-Raster (16) oder in einen Wartungs- und Entnahme-Raum (9) erfolgt, indem das Bedienfahrzeug (3.1, 3.2) die Öffnung (4.1, 4.2) durchquert, wobei das Bedienfahrzeug (3.1, 3.2) zuvor zwischen der Öffnung (4.1, 4.2) und der Barriere (7, 7.2, 13, 14) auf die auf die Öffnung (4.1, 4.2) zu verlaufende Fahrspur (12) auffährt, um anschliessend die Öffnung (4.1, 4.2) zu durchqueren.

12. Verfahren nach Anspruch 11, wobei zumindest eines der Bedienfahrzeuge (3.1, 3.2) auf dem Fahrspur-Raster (15) in einem Automatik-Betrieb verbleibt, nachdem ein anderes Bedienfahrzeug (3.1, 3.2) zwecks Wartung oder Reparatur in den Wartungs- und Entnahmeraum (9) eingefahren ist und dort gewartet oder repariert wird.

13. Verfahren nach Anspruch 10, wobei zumindest eines der Bedienfahrzeuge (3.1, 3.2) auf dem Fahrspur-Raster (15) in einem Automatik-Betrieb verbleibt, bis eine die Öffnung (4.1, 4.2) reversibel verschliessende bewegliche Barriere (8), welche einer Bedienperson Zutritt zu dem Fahrspur-Raster (15) gewährt, geöffnet wird.
